# EUROPEAN PATENT APPLICATION

(11) **EP 1 905 803 A1**
(43) Date of publication of application: **02.04.2008**
(21) Application number: 06766974.7
(22) Date of filing: 20.06.2006
(51) Int. Cl.: C09C 3/10, B01J 13/10, B01J 13/14, B41J 2/01, B41M 5/00, C09D 11/00

(54) **MICROENCAPSULATED MATERIAL, MICROENCAPSULATED COLOR MATERIAL, PROCESS FOR PRODUCTION OF THE MATERIAL, INK COMPOSITION, INK-JET RECORDING METHOD, AND RECORDED MATERIAL**

(30) Priority: 20.06.2005 JP 2005179698
(71) Applicant: Seiko Epson Corporation, Shinjuku-ku Tokyo 163-0811 (JP); Mitsubishi Chemical Corporation, Minato-ku Tokyo 108-0014 (JP)
(72) Inventor: MIYABAYASHI, Toshiyuki, c/o Seiko Epson Corp., Suwa-shi, Nagano 3928502 (JP); YOKOYAMA, Masanobu, Mitsubishi Chemical Group, Yokohama, Kanagawa (JP); SAITOU, Takahiro, Mitsubishi Chemical Group, Yokohama, Kanagawa (JP); TANAKA, Hideaki, c/o Mitsubishi Chemical Corp., Tokyo 108-0014 (JP)
(74) Representative: Grünecker, Kinkeldey, Stockmair & Schwanhäusser Anwaltssozietät
(86) International application number: PCT/JP2006/312313
(87) International publication number: WO 2006/137393

(57) **Abstract**

Problem: To provide a microencapsulated color material for an ink composition which is excellent in dispersion stability, ejection stability and color developability, excellent in fastness and rubbing resistance of images, and hard to cause blurs of images, and can provide recorded matter having high print density; an ink composition using the color material; a production process thereof; an ink jet recording process; recorded matter; and microencapsulated matter.

Means for Resolution: A surface of a core material including color material particles such as a pigment is covered with a wall material mainly comprising: 1) a polymer (A) having an ionic group and a hydrophobic group; and 2) a polymer (B) having at least: repeating structural units derived from a first polymerizable surfactant having an ionic group with a charge opposite to the charge of the ionic group of the polymer, a hydrophobic group and a polymerizable group; and repeating structural units derived from a second polymerizable surfactant having a charge of the same kind as or opposite to the charge of the first polymerizable surfactant, and/or a hydrophilic monomer having a charge of the same kind as or opposite to the charge of the ionic group of the polymer and/or a hydrophobic monomer, thereby performing microencapsulation.

The color material particles such as the pigment are used as the core material, and a color material obtained by microencapsulating them is allowed to be contained in an aqueous medium to form an ink composition, which is ejected from an ink head onto a recording medium by an ink jet recording process, thereby obtaining recorded matter.

By constituting the core material by a pharmaceutical preparation, a metal powder, a ceramic or the like, surface modification of the core material becomes possible.

## Description

### TECHNICAL FIELD

The present invention relates to microencapsulated matter in which a surface of a core material is covered with a wall material mainly comprising a polymer, a microencapsulated color material using color material particles as the core material, and a production process therefor, and further relates to an ink composition containing the microencapsulated color material, particularly suitable as an ink composition for ink jet recording.
Further, the invention relates to an ink jet recording process using the ink composition, and recorded matter using the recording process.

### BACKGROUND ART

An ink jet recording process is a process comprising ejecting ink droplets from fine nozzles of a head to form letters or figures on a surface of a recording medium such as paper. As the ink jet recording process, there have been put to practical use a process in which electric signals are converted to mechanical signals using an electrostrictive element, thereby intermittently ejecting ink droplets stored in a nozzle head section to record letters or symbols on a surface of a recording medium, a process in which part of an ink solution is rapidly heated at a portion close to an ejection portion of a nozzle head to generate bubbles, and ink droplets are intermittently ejected by volume expansion due to the bubbles to record letters or symbols on a surface of a recording medium, and the like.

Recently, an aqueous pigment ink in which a pigment is dispersed in water has been provided as an ink for ink jet recording. This is because an ink using a pigment is characterized by excellent water fastness and light fastness, compared to an ink using a water-soluble dye.
In such an aqueous pigment ink, it has been generally carried out that the pigment is dispersed in an aqueous dispersion medium using a dispersant such as a surfactant or a polymer dispersant.
For example, in patent document 1, it has been studied to use a polymer dispersant as the dispersant for pigment particles, and water, a non-volatile organic solvent and a lower alcohol as the aqueous medium, in a pigment ink using an acetylene glycol-based penetrant, thereby securing dispersion stability thereof. However, when the dispersant is used for dispersion of the pigment particles as described above, elements to be adjusted in ink composition for obtaining various preferred characteristics increase, which has made it difficult to adjust ink physical properties such as viscosity to desired values. Further, it has been difficult to obtain printed matter having sufficiently high print density using this pigment ink.
Furthermore, in these aqueous pigment inks, the dispersant is merely adsorbed on surfaces of the pigment particles. When an ink solution is ejected through fine nozzles of a nozzle head, strong shear force is applied thereto, so that the dispersant adsorbed on the surfaces of the pigment particles is separated to deteriorate dispersibility. As a result, the tendency for ejection of the ink solution to become unstable is observed in some cases. Moreover, when the above-mentioned aqueous pigment ink is stored for a long period of time, the tendency of dispersibility to become unstable is also observed in some cases.

As another technique for dispersing pigment particles in water, there has also been proposed a technique of introducing sulfonic groups into surfaces of the pigment particles. For example, a pigment ink has been known which contains a surface-sulfonated organic pigment obtained by treating with a sulfonating agent an organic pigment dispersed in an active proton-free solvent (conventional example 1; for example, see patent document 2). According to conventional example 1, it has been said that the above-mentioned pigment ink is excellent in dispersion stability, and good in ejection stability from nozzles of a recording head (the characteristic of being stably ejected from the recording head to a definite direction).
Further, there has been known a process for preparing organic pigment bulk matter whose surface is positively charged by treating sulfonic group-introduced organic pigment bulk matter with a monovalent metallic ion, and furthermore, there has been described an aqueous ink composition excellent in storage stability (dispersion stability), which contains fine pigment particles prepared from the organic pigment bulk mass whose surface is positively charged, a dispersant and water (conventional example 2; for example, see patent document 3).

However, although an ink using the surface-treated pigment particles of the above-mentioned conventional example 1 or conventional example 2 as a colorant is excellent in dispersion stability and ejection stability, compared to conventional pigment-based inks for ink jet recording, rubbing resistance of recorded matter obtained by printing on a recording medium such as plain paper or an ink jet recording medium (a recording medium having provided on its surface an ink receiving layer for receiving an ink for ink jet recording) has still been insufficient. This is considered to be due to insufficient fixability of the above-mentioned surface-treated pigment particles to the recording medium.

On the other hand, for the purpose of improving fixability of a pigment contained in a pigment-based ink jet ink to a recording medium, there has been known a technique using a microencapsulated pigment in which colorant particles are covered with a polymer.
There have been proposed encapsulated fine pigment particles (for example, see patent documents 4 to 9 and the like) and pigment particles on surfaces of which a polymer is graft polymerized (for example, see patent documents 10 to 13). Further, there has been proposed a method of microencapsulating a hydrophobic powder using an amphipathic graft polymer (for example, see patent document 14). However, the use of a previously polymerized polymer in microencapsulating has raised the problem that the particle size after encapsulation becomes too large.

Further, in the above-mentioned microencapsulated pigments which have hitherto been proposed (for example, patent documents 7, 8 and 9 and the like), surface-modified pigments (self-dispersion type pigments) are sued as pigment particles which are core materials, and the charge amount on surfaces of the pigments can not be increased so much. Accordingly, it is difficult to uniformly cover the surfaces of the pigments with polymers, which causes deterioration in dispersion stability in some cases, when they are used in inks.
In addition to the above-mentioned proposals, there have been proposed inks containing pigments covered with resins having film forming properties at room temperature by phase inversion emulsification (for example, see patent documents 15 to 23) and inks using pigments covered with anionic group-containing organic polymer compounds by acid precipitation (for example, see patent documents 24 to 33).

Further, there have been proposed inks using polymer emulsions in which fine polymer particles are impregnated with colorants by phase inversion emulsification (conventional example 3; for example, patent documents 34 to 39)). However, in the colorant obtained by phase inversion emulsification or acid precipitation, the polymer adsorbed on the pigment particles is also sometimes separated and dissolved in the ink, depending on the kind of organic solvent such as a penetrant used in the ink, so that dispersion stability and ejection stability of the ink, image quality and the like have been insufficient in some cases. In the ink of conventional example 3, the polymer adsorbed on the pigment particles is not a little separated, so that the pigment content in the ink is limited from the point of dispersion stability. Accordingly, images of recorded matter obtained by using this ink have low print density, and particularly, when plain paper is used as the recording medium, there have been the problems that blurring is liable to occur in the images, and that color developability is also low.

Patent Document 1: JP-A-3-157464
Patent Document 2: JP-A-10-110129
Patent Document 3: JP-A-11-49974
Patent Document 4: JP-B-7-94634
Patent Document 5: JP-A-8-59715
Patent Document 6: JP-A-2003-30661
Patent Document 7: JP-A-2005-97476
Patent Document 8: JP-A-2005-120136
Patent Document 9: JP-A-2005-133012
Patent Document 10: JP-A-5-339516
Patent Document 11: JP-A-8-302227
Patent Document 12: JP-A-8-302228
Patent Document 13: JP-A-8-81647
Patent Document 14: JP-A-5-320276
Patent Document 15: JP-A-08-218015
Patent Document 16: JP-A-08-295837
Patent Document 17: JP-A-09-3376
Patent Document 18: JP-A-08-183920
Patent Document 19: JP-A-10-46075
Patent Document 20: JP-A-10-292143
Patent Document 21: JP-A-11-80633
Patent Document 22: JP-A-11-349870
Patent Document 23: JP-A-2000-7961
Patent Document 24: JP-A-9-31360
Patent Document 25: JP-A-9-217019
Patent Document 26: JP-A-9-316353
Patent Document 27: JP-A-9-104834
Patent Document 28: JP-A-9-151342
Patent Document 29: JP-A-10-140065
Patent Document 30: JP-A-11-152424
Patent Document 31: JP-A-11-166145
Patent Document 32: JP-A-11-199783
Patent Document 33: JP-A-11-209672
Patent Document 34: JP-A-9-286939
Patent Document 35: JP-A-2000-44852
Patent Document 36: JP-A-2000-53897
Patent Document 37: JP-A-2000-53898
Patent Document 38: JP-A-2000-53899
Patent Document 39: JP-A-2000-53900

### DISCLOSURE OF THE INVENTION

### PROBLEMS TO BE SOLVED BY THE INVENTION

An object of the invention is to provide a microencapsulated color material which can produce an ink for ink jet recording satisfying all the following (1) to (6), a production process thereof, an ink composition, an ink jet recording process using the ink composition and recorded matter using the recording process.
(1) Excellent in dispersion stability in an aqueous dispersion when used as a color material for an ink composition;
(2) Excellent in ejection stability from a recording head when used in the ink composition;
(3) Capable of obtaining recorded matter excellent in fastness of images when used in the ink composition;
(4) Capable of obtaining recorded matter excellent in print density of images when used in the ink composition;
(5) Capable of obtaining recorded matter excellent in rubbing resistance of images when used in the ink composition; and
(6) Capable of obtaining recorded matter in which images are hard to blur, and which is excellent in color developability of images when used in the ink composition, even when plain paper is used as a recording medium.

Further, an object of the invention is to provide microencapsulated matter satisfying all the following i) to vi).
i) Capable of using either of an inorganic material and an organic material as a core material;
ii) Capable of freely designing the thickness of a shell layer (a coating layer for the core material);
iii) Friendly to the environment;
iv) Capable of separating its functions depending on the core material or shell material;
v) Capable of decreasing toxicity of the core material having toxicity and the like or rendering it harmless by encapsulation; and
vi) Capable of producing a powder having a particle size.

### MEANS FOR SOLVING THE PROBLEMS

As a result of extensive investigations of methods for microencapsulating a core material represented by pigment particles with a wall material mainly comprising a polymer, the present inventors have found that the above-mentioned objects of the invention can be achieved by previously physically adsorbing a polymer having an ionic group and a hydrophobic group to surfaces of the core material particles, and forming a polymer of: a polymerizable surfactant having a charge opposite to the polymer; a polymerizable surfactant having an ionic group of the same kind as or a different kind from that of the surfactant; and a polymerizable group-containing monomer, on the surface of the core material, thereby microencapsulating the core material.
That is, the invention has succeeded in solving the above-mentioned problems by employing the following constitutions (1) to (11):

(1) A microencapsulated color material in which surfaces of color material particles are covered with a wall material mainly comprising a polymer, wherein the polymer comprises:
   1) a polymer (A) having an ionic group and a hydrophobic group; and
   2) a polymer (B) having at least: repeating structural units derived from a first polymerizable surfactant having an ionic group with a charge opposite to the charge of the ionic group of the polymer, a hydrophobic group and a polymerizable group; and repeating structural units derived from a second polymerizable surfactant having a charge of the same kind as or opposite to the charge of the first polymerizable surfactant, and/or a hydrophilic monomer having a charge of the same kind as or opposite to the charge of the ionic group of the polymer and/or a hydrophobic monomer;

(2) The microencapsulated color material described in the above (1), wherein the above-mentioned color material particles are non-dispersible in water or insoluble in water;
(3) The microencapsulated color material described in the above (1) or (2), wherein the color material particles are a pigment;
(4) The microencapsulated color material described in any one of the above (1) to (3), wherein the polymer (A) having an ionic group and a hydrophobic group is a copolymer;
(5) The microencapsulated color material described in any one of the above (1) to (4), wherein the ionic group of the polymer (A) is a cationic group;

(6) A production process of the microencapsulated color material described in any one of the above (1) to (5), wherein the process comprises at least the steps of:
   (1) allowing the polymer (A) having an ionic group-and a hydrophobic group to be adsorbed on the surfaces of the color material particles in an aqueous solvent;
   (2) adding the first polymerizable surfactant having an ionic group with a charge opposite to the charge of the ionic group of the polymer (A), a hydrophobic group and a polymerizable group to an aqueous dispersion of the color material particles to which the polymer (A) have been adsorbed, followed by mixing;
   (3) after the step (2), adding the second polymerizable surfactant having a charge of the same kind as or opposite to the charge of the first polymerizable surfactant, and/or the hydrophilic monomer having a charge of the same kind as or opposite to the charge of the ionic group of the polymer (A) and/or the hydrophobic monomer, followed by emulsification; and
   (4) following the step (3), adding a polymerization initiator thereto, and conducting polymerization to obtain the polymer (B);

(7) An ink composition comprising the microencapsulated color material described in the above (1) to (5);
(8) The ink composition described in the above (7), further comprising fine polymer particles having a volume average particle size of 10 to 200 nm;

(9) An ink jet recording process comprising ejecting droplets of the ink composition described in the above (7) or (8) from an ink jet head so that the droplets adhere to a recording medium;

(10) Recorded matter using the recording process described in the above (10); and

(11) Microencapsulated matter in which a surface of a core material is covered with a wall material mainly comprising a polymer, wherein the polymer comprises
   1) a polymer (A) having an ionic group and a hydrophobic group,
   2) repeating structural units derived from a first polymerizable surfactant having an ionic group with a charge opposite to the charge of the ionic group of the polymer (A), a hydrophobic group and a polymerizable group, and
   3) a polymer (B) having at least repeating structural units derived from a second polymerizable surfactant having a charge of the same kind as or opposite to the charge of the first polymerizable surfactant, and/or a hydrophilic monomer having a charge of the same kind as or opposite to the charge of the ionic group of the polymer (A) and/or a hydrophobic monomer.

### ADVANTAGEOUS EFFECTS OF THE INVENTION

The microencapsulated color material produced by using the production method of the invention is excellent in dispersion stability in an aqueous dispersion, when used as a color material for the ink composition. Then, the ink composition of the invention is excellent in ejection stability from a recording head, and the recorded matter excellent in fastness of images, high in print density of images and excellent in rubbing resistance of images can be obtained. Further, according to the ink jet recording process of the invention, there is obtained the recorded matter in which images are hard to blur, and which is high in color developability of images, even when plain paper is used as a recording medium.
Further, in the microencapsulated matter of the invention, either of an inorganic material and an organic material can be used as a core material thereof, and the thickness of a shell layer (a coating layer for the core material) can be freely designed. Furthermore, it can be produced by aqueous reaction without using a solvent, so that the environment is not adversely affected, and it is possible to decrease toxicity of the core material having toxicity and the like or to render it harmless by encapsulation.
Still further, according to the microencapsulated material of the invention, there are achieved the effects of being capable of separating its functions depending on the core material or shell material and moreover being capable of producing a powder having an uniform surface state and a uniform particle size.

### BEST MODE FOR CARRYING OUT THE INVENTION

The microencapsulated color material according to the invention is a microencapsulated color material in which surfaces of color material particles are covered with a wall material mainly comprising a polymer, the polymer comprising 1) a polymer (A) having an ionic group and a hydrophobic group, and 2) a polymer (B) having at least: repeating structural units derived from a first polymerizable surfactant having an ionic group with a charge opposite to the charge of the ionic group of the polymer, a hydrophobic group and a polymerizable group; and repeating structural units derived from a second polymerizable surfactant having a charge of the same kind as or opposite to the charge of the first polymerizable surfactant, and/or a hydrophilic monomer having a charge of the same kind as or opposite to the charge of the ionic group of the polymer and/or a hydrophobic monomer.

Such a microencapsulated color material can be suitably produced by a process comprising at least the steps of (1) adsorbing the polymer (A) having an ionic group and a hydrophobic group to the surfaces of the color material particles in an aqueous solvent, (2) adding the first polymerizable surfactant having an ionic group with a charge opposite to the charge of the ionic group of the polymer (A), a hydrophobic group and a polymerizable group to an aqueous dispersion of the color material particles to which the polymer (A) have been adsorbed, followed by mixing, (3) after the step (2), adding the second polymerizable surfactant having a charge of the same kind as or opposite to the charge of the first polymerizable surfactant, and/or a hydrophilic monomer having a charge of the same kind as or opposite to the charge of the ionic group of the polymer (A) and/or a hydrophobic monomer, followed by emulsification, and (4) following the step (3), adding a polymerization initiator thereto, and conducting polymerization to obtain the polymer (B).
The polymer is not particularly limited, but one prepared by a living radical polymerization process is preferred, because the polymer having a narrow molecular weight distribution is obtained.

Further, the microencapsulated matter according to the invention comprises the same constitution as with the microencapsulated color material with the exception that a core material other than the color material is used in place of the color material particles.

For the microencapsulated color material according to the invention, there will be described below various raw materials used for producing this, and a production process of the microencapsulated color material using these raw materials.

### [Color Material Particles]

In the invention, color material particles having adsorbed on their surfaces the polymer (A) having an ionic group and a hydrophobic group are used. The color material used as a raw material for the color material particles having adsorbed on their surfaces the polymer (A) is not particularly limited, as long as it is a color material which is used in the step of adsorbing the polymer (A) to the particle surfaces and insoluble or non-dispersible in an aqueous medium mainly comprising water. From such a viewpoint, the preferred color materials used as the core material in the microencapsulated color material of the invention include a water-insoluble or water-non-dispersible pigment and/or a water-insoluble dye.

In particular, in the case of the water-insoluble or water-non-dispersible pigment and/or the water-insoluble dye, surface adsobability by an interaction between the hydrophobic group of the polymer (A) having an ionic group and a hydrophobic group and the color material is improved, resulting in that the ionic group surrounds the periphery of the particle. It is conceivable that polymer (B) further surrounds its periphery, thereby resulting in improved dispersion stability of the microencapsulated color material. In addition, the water-insoluble or water-non-dispersible pigment is preferred in that it can be used without applying special treatment to the pigment, and in that the surface charge amount of the microencapsulated color material can be controlled by an easier process and with an encapsulating material by which the addition of a high charge amount is possible, not controlled by the amount of surface treatment.
Of these, the pigment is preferred from the viewpoints of color developability and weather resistance, and particularly preferred examples thereof include the following inorganic pigments, organic pigments and inorganic-organic composite pigments thereof.

The inorganic pigments include carbon blacks (C.I. Pigment Black 7) such as furnace black, lamp black, acetylene black and channel black, iron oxide pigments and the like. The organic pigments include azo pigments (including azo lakes, insoluble azo pigments, condensed azo pigments, chelate azo pigments and the like), polycyclic pigments (for example, including phthalocyanine pigments, perylene pigments, perinone pigments, anthraquinone pigments, quinacridone pigments, dioxane pigments, thioindigo pigments, isoindolinone pigments, quinofranone pigments and the like), dye chelates (for example, including basic dye type chelates and acidic dye type chelates), nitro pigments, nitroso pigments, aniline black and the like. These include black pigments, cyan pigments, magenta pigments and yellow pigments. Further, as desired, a pigment of another color can also be used in the invention.

These pigments which can be used in the invention will be described in more detail.
The inorganic pigments used for black include, for example, the following carbon blacks, for example, No. 2300, No. 900, MCF88, No. 33, No. 40, No. 45, No. 52, MA7, MA8, MA100, No. 2200B and the like (the above are trade names) manufactured by Mitsubishi Chemical Corp.; Raven 5750, Raven 5250, Raven 5000, Raven 3500, Raven 1255, Raven 700 and the like (the above are trade names) manufactured by Columbian Carbon; Regal 400R, Regal 330R, Regal 660R, Mogul L, Monarch 700, Monarch 800, Monarch 880, Monarch 900, Monarch 1000, Monarch 1100, Monarch 1300, Monarch 1400 and the like (the above are trade names) manufactured by Cabot Corp.; and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, Special Black 4 and the like (the above are trade names) manufactured by Degussa Corp.

Further, as the organic pigment for black, there can also be used a black organic pigment such as aniline black (C.I. Pigment Black 1).

The organic pigments for a yellow ink include C.I. Pigment Yellow 1 (Hansa Yellow); 2, 3 (Hansa Yellow 10G); 4, 5 (Hansa Yellow 5G) ; 6, 7, 10, 11, 12, 13, 14, 16, 17, 24 (Flavanthrone Yellow); 34, 35, 37, 53, 55, 65, 73, 74, 75, 81, 83, 93, 94, 95, 97, 98, 99, 108 (Anthrapyrimidine Yellow); 109, 110, 113, 117 (copper complex salt pigment); 120, 124, 128, 129, 133 (quinophthalone); 138, 139 (isoindolinone); 147, 151, 153 (nickel complex pigment); 154, 167, 172, 180 and the like.

The organic pigments for a magenta ink include, for example, C.I. Pigment Red 1 (Para Red); 2, 3 (Toluidine Red); 4, 5 (ITR Red); 6, 7, 8, 9, 10, 11, 12, 14, 15, 16, 17, 18, 19, 21, 22, 23, 30, 31, 32, 37, 38 (Pyrazolone Red); 40, 41, 42, 48 (Ca) ; 48 (Mn), 57 (Ca), 57 : 1, 88 (thioindigo); 112 (Naphthol AS series); 114 (Naphthol AS series); 122 (dimethylquinacridone); 123, 144, 146, 149, 150, 166, 168 (Anthoanthrone Orange); 170 (Naphthol AS series); 171, 175, 176, 177, 178, 179 (Perylene Maroon); 184, 185, 187, 202, 209 (dichloroquinacridone); 219, 224 (perylene series); and 245 (Naphthol AS series); or C.I. Pigment Violet 19 (quinacridone), 23 (Dioxazine Violet); 32, 33, 36, 38, 43, 50; and the like.

The organic pigments for a cyan ink include, for example, C.I. Pigment Blue 1, 2, 3, 15, 15:1, 15:2, 15:3, 15:34, 15:4, 16 (metal-free phthalocyanine); 18 (alkali blue toner); 22, 25, 60 (Threne Blue); 65 (violanthrone), 66 (indigo); and C.I. Vat Blue 4, 60; and the like.

Further, as the organic pigments used for a color ink other than a magenta, cyan or yellow ink, there can be used C.I. Pigment Green 7 (Phthalocyanine Green); 10 (Green Gold); 36, 37; C.I. Pigment Brown 3, 5, 25, 26; and C.I. Pigment Orange 1, 2, 5, 7, 13, 14, 15, 16, 24, 34, 36, 38, 40, 43, 63; and the like in the invention.
As the raw material for the microencapsulated pigment according to the invention, the pigments can be used either alone or as a combination of two or more thereof.

In the invention, the treatment of allowing the polymer (A) having an ionic group and a hydrophobic group separately prepared by a process such as the living radical polymerization process to be adsorbed by the surfaces of the pigment particles is first conducted to the surface of such a pigment as exemplified above. As the polymer (A) which is adsorbed to the surface of the pigment, there can be used, for example, a homopolymer synthesized from a monomer having an ionic group, either an anionic group or a cationic group, and a hydrophobic group, or a copolymer having an ionic group, either an anionic group or a cationic group, and a hydrophobic group. Of these, the copolymer is preferred from the viewpoints of easy availability of the monomer and easy synthesis.

### [Homopolymers Having Ionic Group and Hydrophobic Group]

The homopolymer having an ionic group and a hydrophobic group is one synthesized from a monomer having an ionic group, either an anionic group or a cationic group, and a hydrophobic group. As the anionic group, preferred is, for example, one selected from the group consisting of a sulfonic acid group, a carboxylic acid group, a phosphoric acid group and a salt thereof. As the cationic group, preferred is, for example, one selected from the group consisting of a primary amino group, a secondary amino group, a tertiary amino group, a quaternary amino group and a salt thereof. Further, as the hydrophobic group, preferred is, for example, one selected from the group consisting of an alkyl group and an aryl group.

### [Copolymers Having Ionic Group and Hydrophobic Group]

The copolymer used in the invention is not limited, as long as it contains both an ionic group and a hydrophobic group. From such a viewpoint, examples of the copolymers used in the invention include a random copolymer, a di-block copolymer, a tri-block or more multi-block copolymer, a gradient copolymer, a graft copolymer, a star copolymer and the like.
Further, the copolymer may contain a hydrophilic nonionic group, as long as it contains both an ionic group and a hydrophobic group. The monomers used for synthesis of these polymers include the following.

### [Hydrophobic Monomers]

The hydrophobic monomers include, for example, olefins such as ethylene, propylene, 1-butene and isobutene; acrylic esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate and octadecyl acrylate; methacrylic esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate and octadecyl methacrylate; styrene derivatives such as styrene, o-methoxystyrene, m-methoxystyrene, p-methoxystyrene, o-t-butoxystyrene, m-t-butoxystyrene, p-t-butoxystyrene, o-chloromethylstyrene, m-chloromethylstyrene and p-chloromethylstyrene; acrylamide derivatives such as N-methyl acrylamide, N-ethyl acrylamide, N,N-dimethyl acrylamide, diacetone acrylamide, N-methylol acrylamide and a derivative thereof; methacrylamide derivatives such as N-methyl methacrylamide, N-ethyl methacrylamide, N,N-dimethyl methacrylamide, diacetone methacrylamide, N-methylol methacrylamide and a derivative thereof; vinyl ethers such as methyl vinyl ether, ethyl vinyl ether, n-propyl vinyl ether, i-propyl vinyl ether, i-butyl vinyl ether, t-butyl vinyl ether, benzyl vinyl ether, dodecyl vinyl ether and stearyl vinyl ether; nitriles such as acrylonitrile and methacrylonitrile; vinyl halides such as vinyl chloride, vinylidene chloride, vinyl fluoride and vinylidene fluoride; allyl compounds such as allyl acetate and allyl chloride; dicarboxylic acid ester derivatives such as a maleic acid ester and an itaconic acid ester; vinylsilyl compounds such as vinyltrimethoxysilane; isopropenyl acetate; and the like.

### [Anionic Monomers]

The anionic monomers include, for example, acrylic acid, methacrylic acid, itaconic acid, maleic acid, fumaric acid, vinylsulfonic acid, allylsulfonic acid, methacrylsulfonic acid, styrenesulfonic acid, 2-acrylamidoethanesulfonic acid, 2-acrylamido-2-methylpropanesulfonic acid, 2-acryloyloxyethanesulfonic acid, 3-acryloyloxypropanesulfonic acid, 4-acryloyloxybutanesulfonic acid, 2-methacryloyloxyethane-sulfonic acid, 3-acryloyloxypropanesulfonic acid, 4-acryloyloxybutanesulfonic acid, a metal salt thereof such as an alkali metal salt or a alkali earth metal salt or an ammonium salt thereof; and the like.

### [Cationic Monomers]

The cationic monomers include, for example, neutralized salts with a hydrogen halide, sulfuric acid, nitric acid, an organic acid or the like of dimethylamino(methyl, ethyl, propyl or butyl) acrylate or methacrylate, diethylamino(methyl, ethyl, propyl or butyl) acrylate or methacrylate, di-n-propylamino(methyl, ethyl, propyl or butyl) acrylate or methacrylate, diisopropylamino(methyl, ethyl, propyl or butyl) acrylate or methacrylate, di-n-butylamino(methyl, ethyl, propyl or butyl) acrylate or methacrylate, di-sec-butylamino(methyl, ethyl, propyl or butyl) acrylate or methacrylate, diisobutylamino(methyl, ethyl, propyl or butyl) acrylate or methacrylate, dimethylamino(methyl, ethyl, propyl or butyl) acrylamide or methacrylamide, diethylamino(methyl, ethyl, propyl or butyl) acrylamide or methacrylamide, din-propylamino(methyl, ethyl, propyl or butyl) acrylamide or methacrylamide, diisopropylamino(methyl, ethyl, propyl or butyl) acrylamide or methacrylamide, di-n-butylamino(methyl, ethyl, propyl or butyl) acrylamide or methacrylamide, di-sec-butylamino(methyl, ethyl, propyl or butyl) acrylamide or methacrylamide, diisobutylamino(methyl, ethyl, propyl or butyl) acrylamide or methacrylamide, and the like; and quaternized materials thereof with an alkyl halide, a benzyl halide, dimethylsulfuric acid, diethylsulfuric acid or the like.

In order to allow the polymer to be adsorbed by the surfaces of the color material particles, what is necessary is just to conduct, for example, dispersing treatment to a specified amount of the polymer and the color material particles in the aqueous medium mainly comprising water using a general dispersing apparatus, and as the dispersing apparatus used in the dispersing treatment, there can be appropriately used various dispersing apparatus generally used for pigment dispersion. Although the dispersing apparatus is not particularly limited, there can be used a paint shaker, a ball mill, a sand mill, an attritor, a pearl mill, a CoBall mill, a homomixer, a homogenizer, a wet jet mill, an ultrasonic homogenizer or the like. As media used in the dispersing apparatus, there can be used glass beads, zirconia beads, alumina beads, magnetic beads and styrene beads. Of these, a particularly preferred dispersing treatment formulation is a process of dispersing beads in a mill as the medium, and then, dispersing with an ultrasonic homogenizer.

A process for obtaining a color material dispersion having an preferred particle size is not particularly limited, but there are used various processes of decreasing the size of the dispersing medium of the dispersing apparatus, increasing the filling factor of the dispersing medium, increasing the concentration of the color material in the dispersion, increasing the treating time, performing classification with a filter or a centrifuge after dispersing, and the like, or appropriate combinations of those techniques.
When an undesirable phenomenon such as an increase in viscosity or foaming of the dispersion caused by heat generation in dispersing, it is desirable to conduct the dispersing treatment with cooling.

The amount of the polymer which is allowed to be adsorbed on the surfaces of the color material particles is an amount ranging preferably from about 1 to about 500% by weight, more preferably from 10 to 200% by weight, based on the color material particles. When the polymer amount is too small, the color material aggregates in the aqueous medium by unstable dispersion. Further, there is a limit to the adsorbed amount of the polymer to the color material, depending on the hydrophilicity-hydrophobicity balance of the polymer, the total surface area of the color material particles, the affinity of the hydrophobic group with the surfaces of the color material particles, and the like. When the polymer amount is too large, the amount of a free polymer not adsorbed to the color material increases, which unfavorably causes an increase in viscosity of the dispersion and dispersion destabilization.

Into the aqueous dispersion of the color material particles by which the polymer has been allowed to be adsorbed as described above, the first polymerizable surfactant having an ionic group with a charge opposite to the charge of the ionic group of the polymer, a hydrophobic group and a polymerizable group is added, followed by mixing. Then, the second polymerizable surfactant having a charge of the same kind as or opposite to the charge of the first polymerizable surfactant, and/or a hydrophilic monomer having a charge of the same kind as or opposite to the charge of the ionic group of the polymer and/or a hydrophobic monomer is added into this dispersion to emulsify the aqueous dispersion, thereby forming micelles. The polymerization initiator is added thereto to conduct polymerization, thereby covering the surfaces of the color material particles with the organic polymer. Thus, the microencapsulated color material of the invention can be obtained.

In general, as the ink for ink jet, a neutral to alkalescent ink is used for maintenance of an apparatus, and it is preferred that the ionic group of the outermost shell is an anionic group. Accordingly, although not particularly limited, the ionic group of the polymer (A) in the microencapsulated color material of the invention is preferably a cationic group, because the charge of the outermost shell is easily inverted to an anionic group.

Here, the ionic group with a charge opposite to the charge of the ionic group of that substance means a minus charge when the charge of the ionic group on the color material particle surface is plus, and a plus charge when the charge of the ionic group on the color material particle surface is minus. The charge of the same kind means a plus charge to the plus charge, and a minus charge to the minus charge.

The cationic polymerizable surfactants and anionic polymerizable surfactants as the first and second polymerizable surfactants usable in the production of the microencapsulated color material of the invention include polymerizable surfactants as described below.

### [Cationic Polymerizable Surfactants]

The cationic polymerizable surfactant used in the invention is a compound having a cationic group as an ionic group, a hydrophobic group and a polymerizable group.
As the cationic group of the cationic polymerizable surfactant, preferred is a cationic group selected from the group consisting of a primary ammonium cation, a secondary ammonium cation, a tertiary ammonium cation and a quaternary ammonium cation. The primary ammonium cations include a monoalkylammonium cation (RNH³⁺) and the like, the secondary ammonium cations include a dialkylammonium cation (R₂NH²⁺) and the like, the tertiary ammonium cations include a trialkylammonium cation (R₃NH⁺) and the like, and the quaternary ammonium cations include R₄N⁺. R as used herein is a hydrophobic group or a polymerizable group, which includes the following.
Counter anions of the cationic groups include Cl⁻, Br⁻, I⁻ and the like.

The hydrophobic group of the R is preferably one or two or more kinds selected from the group consisting of an alkyl group and an aryl group, and one surfactant molecule may contain both an alkyl group and an aryl group.
The polymerizable group of the R is preferably an unsaturated hydrocarbon group, and specifically, it is preferably a group selected from the group consisting of a vinyl group, an allyl group, an acryloyl group, a methacryloyl group, a propenyl group, a vinylidene group and a vinylene group. Of these, an acryloyl group, a methacryloyl group and an allyl group are more preferred.

Specific examples of the cationic polymerizable surfactants include cationic allylic acid derivatives and cationic methacrylic acid derivatives as described in JP-B-4-65824.
Examples thereof include a compound represented by the general formula R_{[4-(1+m+n)]}R¹R²R³N⁺·X⁻ (in the general formula, R is a polymerizable group, R¹, R² and R³ are each an alkyl group or an aryl group, X is Cl, Br or I, and 1, m and n are each 1 or 0). Here, as the polymerizable group, there can be suitably exemplified a hydrocarbon group having a radically polymerizable unsaturated hydrocarbon group. More particularly, the polymerizable groups include an allyl group, an acryloyl group, a methacryloyl group, a vinyl group, a propenyl group, a vinylidene group, a vinylene group and the like.

Specific examples of the cationic polymerizable surfactants include methacrylic acid dimethylaminoethylmethyl chloride, methacrylic acid dimethylaminoethylbenzyl chloride, methacryloyloxyethyltrimethylammonium chloride, diallyldimethylammonium chloride, 2-hydroxy-3-methacryloxypropyltrimethylammonium chloride and the like.

As the cationic polymerizable surfactant, there can also be used a commercially available product. Examples thereof include Acryester DMC (Mitsubishi Rayon Co., Ltd.), Acryester DML60 (Mitsubishi Rayon Co., Ltd.), C-1615 (Daiichi Kogyo Seiyaku Co., Ltd.) and the like.
The cationic polymerizable surfactants exemplified above can be used either alone or as a mixture of two or more thereof.

The anionic polymerizable surfactant used in the invention is a compound having an anionic group as an ionic group, a hydrophobic group and a polymerizable group.
Specific examples of the anionic polymerizable surfactants used in the invention include anionic allyl derivatives as described in JP-B-49-46291, JP-B-1-24142 or JP-A-62-104802, anionic propenyl derivatives as described in JP-A-62-221431, anionic acrylic acid derivatives as described in JP-A-62-34947 or JP-A-55-11525, anionic itaconic acid derivatives as described in JP-B-46-34898 B or JP-A-51-30284, an anionic compound having a radically polymerizable unsaturated carboxylic acid group and a sulfuric ester group in its structure as described in JP-A-62-11534, and the like.

As the anionic polymerizable surfactant used in the invention, preferred is, for example, a compound represented by the following general formula (1):

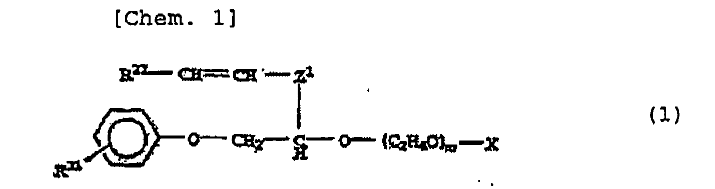

wherein R²¹ and R³¹ are each independently a hydrogen atom or a hydrocarbon group having 1 to 12 carbon atoms, Z¹ is a carbon-carbon single bond or a group represented by formula: -CH₂-O-CH₂-, m is an integer of 2 to 20, and X is a group represented by formula -SO₃M¹, wherein M¹ is an alkali metal, an ammonium salt or an alkanolamine; or a compound represented by the following general formula (2):

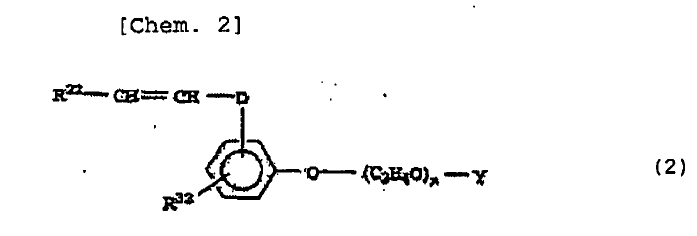

wherein R²² and R³² are each independently a hydrogen atom or a hydrocarbon group having 1 to 12 carbon atoms, D is a carbon-carbon single bond or a group represented by formula: -CH₂-O-CH₂-, n is an integer of 2 to 20, and Y is a group represented by formula -SO3M², wherein M² is an alkali metal, an ammonium salt or an alkanolamine.

The polymerizable surfactants represented by the formula (1) include compounds described in JP-A-5-320276 and JP-A-10-316909. By appropriately adjusting the value of m in formula (1), it is possible to adjust hydrophilicity of the surfaces of the microencapsulated color material particles obtained by microencapsulating the color material particles.
Preferred examples of the polymerizable surfactants represented by formula (1) include a compound represented by the following formula (3), and further specifically include compounds represented by the following formulas (3a) to (3d):

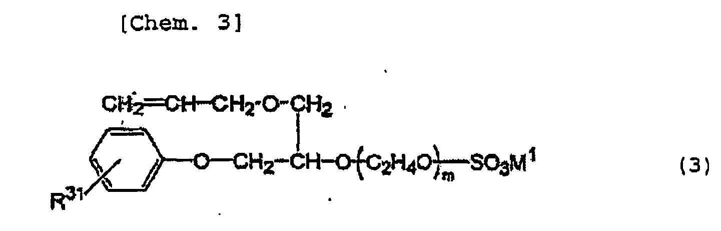

wherein R³¹, m and M1 have the same meanings as given for the compound represented by formula (1);

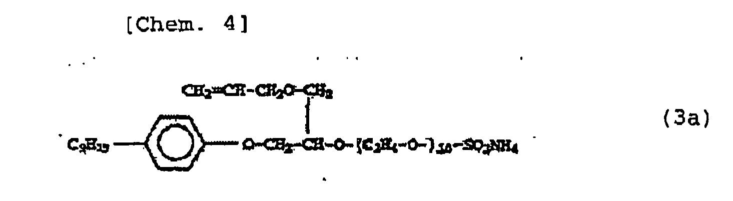

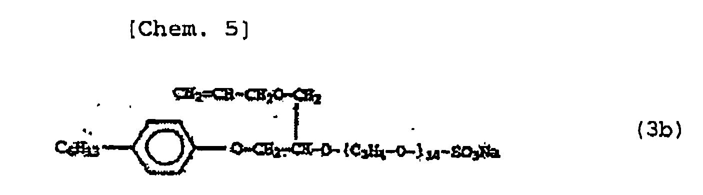

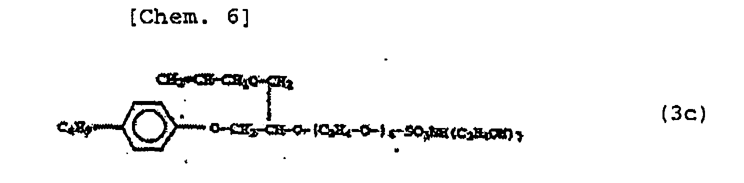

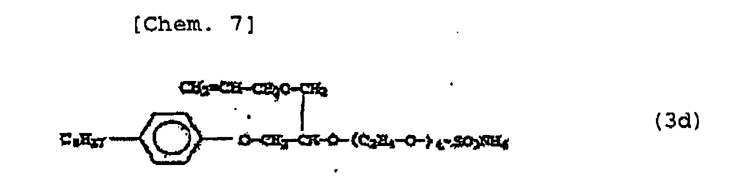

As the anionic polymerizable surfactants, there can also be used commercially available products. The commercially available products include Aqualon HS series (Aqualon HS-05, HS-10, HS-20 and HS-1025) (the above are trade names) manufactured by Daiichi Kogyo Seiyaku Co., Ltd., Adeka Reasoap SE-10N and SE-20N (the above are trade names) manufactured by Asahi Denka Co., Ltd.
Adeka Reasoap SE-10N of Asahi Denka Co., Ltd. is a compound in which M¹ is NH4, R³¹ is C₉H₁₉, and m is 10, in the compound represented by formula (3). Adeka Reasoap SE-20N supplied from Asahi Denka Co., Ltd. is a compound in which H¹ is NH₄, R³¹ is C₉H₁₉, and m is 20, in the compound represented by formula (3).

Further, as the anionic polymerizable surfactant used in the invention, preferred is, for example, a compound represented by the following general formula (4):

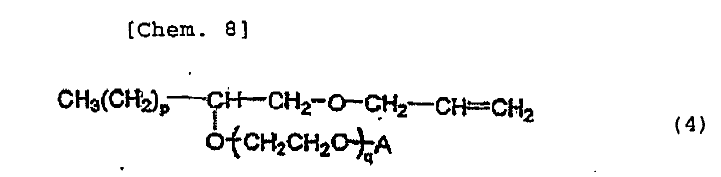

wherein p is 9 or 11, q is an integer of 2 to 20, and A is a group represented by -SO₃M³, wherein M³ is an alkali metal, an ammonium salt or an alkanolamine.
Preferred examples of the anionic polymerizable surfactants represented by formula (4) include a compound of the following formula (formula (4a)):

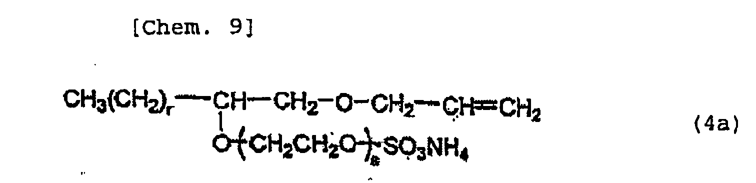

wherein r is 9 or 11, and s is 5 or 10.

As the anionic polymerizable surfactant, there can also be used commercially available product. The commercially available products include, for example, Aqualon KH series (Aqualon KH-5 and Aqualon KH-10) manufactured by Daiichi Kogyo Seiyaku Co., Ltd., and the like. Aqualon KH-5 is a mixture of a compound in which r is 9 and s is 5, and a compound in which r is 11 and s is 5, in the compound represented by the formula (4).

Further, as the anionic polymerizable surfactant used in the invention, a compound represented by the following formula (5) is also preferred.

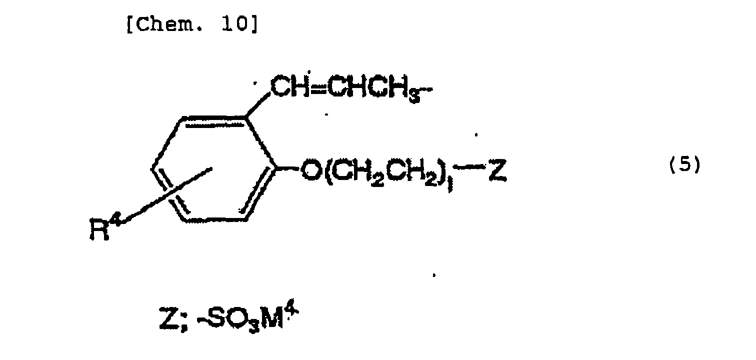

In the formula (5), R⁴ represents a hydrogen atom or a hydrocarbon group having 1 to 12 carbon atoms, 1 represents a number of 2 to 20, and M₄ represents an alkali metal, an ammonium salt or an alkanolamine.
Still further, as the anionic polymerizable surfactant used in the invention, there is also suitably used, for example, a compound represented by general formula (6): 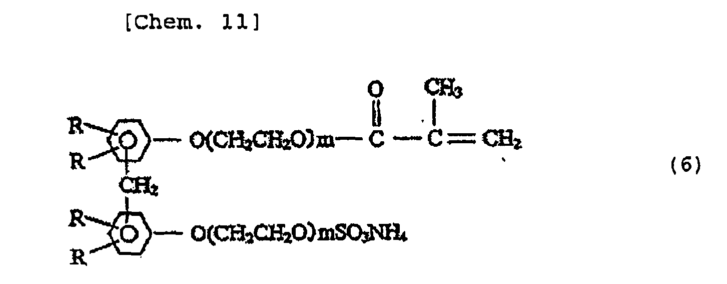 wherein R's are each independently a hydrogen atom or a hydrocarbon group having 1 to 18 carbon atoms, and m's are each independently an integer of 2 to 20.
As the anionic polymerizable surfactant, there can also be used commercially available product. The commercially available products include, for example, Antox MS-60 (the above is a trade name) manufactured by Nippon Nyukazai Co., Ltd., and the like.

The anionic polymerizable surfactants exemplified above can be used either alone or as a mixture of two or more thereof.
In the invention, a polymerizable surfactant in which the cationic polymerizable surfactant and/or anionic polymerizable surfactant exemplified above further also have a hydrophobic group is selected for use.

Further, the hydrophilic monomers which can be used in the production of the microencapsulated color material of the invention include, for example, the following monomers.

### [Hydrophilic Monomers]

As preferred specific examples of the hydrophilic monomers having an anionic group in the invention, carboxyl group-containing monomers include, for example, acrylic acid, methacrylic acid, crotonic acid, propylacrylic acid, isopropylacrylic acid, 2-acryloyloxy-ethylsuccinic acid, 2-acryloyloxyethylphthalic acid, 2-methacryloyloxyethylsuccinic acid, 2-methacryloyloxyethyl-phthalic acid, itaconic acid, fumaric acid, maleic acid and the like as. Of these, preferred are acrylic acid and methacrylic acid.
Sulfonic acid group-containing monomers include, for example, 4-styrenesulfonic acid and a salt thereof, vinylsulfonic acid and a salt thereof, sulfoethyl acrylate and a salt thereof, sulfoethyl methacrylate and a salt thereof, a sulfoalkyl acrylate and a salt thereof, a sulfoalkyl methacrylate and a salt thereof, sulfopropyl acrylate and a salt thereof, sulfopropyl methacrylate and a salt thereof, a sulfoaryl acrylate and a salt thereof, a sulfoaryl methacrylate and a salt thereof, butylacrylamidosulfonic acid and a salt thereof, 2-acrylamido-2-methylpropanesulfonic acid and a salt thereof, and the like.
Phosphonic acid group-containing monomers include phosphoric acid group-containing (meth)acrylates such as phosphoethyl methacrylate.

As hydrophilic monomers other than the anionic group-containing hydrophilic monomers, there can be mentioned hydroxyl group-containing monomers including, for example, 2-hydroxyethyl acrylate, 2-hydroxyethyl methacrylate, 2-hydroxypropyl acrylate, 2-hydroxypropyl methacrylate, 2-hydroxybutyl acrylate, 2-hydroxybutyl methacrylate, polyethylene glycol 400 monomethacrylate, polyethylene glycol monomethacrylate, 2-hydroxy-3-phenoxypropyl acrylate and the like.
There can be also mentioned amido group-containing monomers including acrylamide, methacrylamide, acrylic acid aminoethylamide, acrylic acid methylaminoethylamide, acrylic acid methylaminopropylamide, acrylic acid ethylaminoethylamide, acrylic acid ethylaminopropylamide, acrylic acid aminopropylamide, methacrylic acid aminoethylamide, methacrylic acid methylaminoethylamide, methacrylic acid methylaminopropylamide, methacrylic acid ethylaminoethylamide, methacrylic acid ethylaminopropylamide, methacrylic acid aminopropylamide, vinylpyrrolidone and the like.

Furthermore, there can be mentioned preferred specific examples of the cationic group-containing hydrophilic monomers, which include methacrylic acid dimethylaminoethylmethyl chloride, methacrylic acid dimethylaminoethylbenzyl chloride, methacryloyloxyethyltrimethylammonium chloride, diallyldimethylammonium chloride and 2-hydroxy-3-methacryloxypropyltrimethylammonium chloride and the like.

### [Hydrophobic Monomers]

Further, preferred specific exampled of the hydrophobic monomers include, for example, olefins such as ethylene, propylene, 1-butene and isobutene; acrylic esters such as methyl acrylate, ethyl acrylate, n-propyl acrylate, i-propyl acrylate, n-butyl acrylate, i-butyl acrylate, t-butyl acrylate, 2-ethylhexyl acrylate, dodecyl acrylate and octadecyl acrylate; methacrylic esters such as methyl methacrylate, ethyl methacrylate, n-propyl methacrylate, i-propyl methacrylate, n-butyl methacrylate, i-butyl methacrylate, t-butyl methacrylate, 2-ethylhexyl methacrylate, dodecyl methacrylate and octadecyl methacrylate; styrene derivatives such as styrene, o-methoxystyrene, m-methoxystyrene, p-methoxystyrene, o-t-butoxystyrene, m-t-butoxystyrene, p-t-butoxystyrene, o-Chloromethylstyrene, m-chloromethylstyrene and p-chloromethylstyrene; acrylamide derivatives such as Nmethyl acrylamide, N-ethyl acrylamide, N,N-dimethyl acrylamide, diacetone acrylamide, N-methylol acrylamide and a derivative thereof; methacrylamide derivatives such as N-methyl methacrylamide, N-ethyl methacrylamide, N,N-dimethyl methacrylamide, diacetone methacrylamide, N-methylol methacrylamide and a derivative thereof; vinyl ethers such as methyl vinyl ether, ethyl vinyl ether, n-propyl vinyl ether, i-propyl vinyl ether, i-butyl vinyl ether, t-butyl vinyl ether, benzyl vinyl ether, dodecyl vinyl ether and stearyl vinyl ether; nitriles such as acrylonitrile and methacrylonitrile; vinyl halides such as vinyl chloride, vinylidene chloride, vinyl fluoride and vinylidene fluoride; allyl compounds such as allyl acetate and allyl chloride; dicarboxylic acid ester derivatives such as a maleic acid ester and an itaconic acid ester; vinylsilyl compounds such as vinyltrimethoxysilane; isopropenyl acetate; and the like.

The microencapsulated color material particles of the invention are produced by covering the surfaces thereof with the material mainly comprising the polymer, and as a raw material for obtaining this polymer by polymerization, an additional polymerizable monomer component can be used in addition to the various polymerizable surfactants, hydrophobic monomers and hydrophilic monomers, within the range not impairing the effect of the invention.

The additional polymerizable monomers used in the invention include, for example, a crosslinkable monomer. The crosslinkable monomer is copolymerized to synthesize the microcapsule wall material, thereby being able to enhance solvent resistance of the microcapsule wall material. By enhancing solvent resistance of the microcapsule wall material, dispersion stability of the microencapsulated color material particles can be made excellent even in an aqueous ink composition containing a solvent having high affinity with the polymer constituting the microcapsule wall material.

The crosslinkable monomer used in the invention is a compound having two or more unsaturated hydrocarbon groups of one or more kinds selected from the group consisting of a vinyl group, an allyl group, an acryloyl group, a methacryloyl group, a propenyl group, a vinylidene group and a vinylene group, and examples thereof include ethylene glycol diacrylate, diethylene glycol diacrylate, triethylene glycol diacrylate, tetraethylene glycol diacrylate, polyethylene glycol diacrylate, allyl acrylate, bis(acryloxyethyl)hydroxyethyl isocyanurate, bis(acryloxyneopentyl glycol) adipate, 1,3-butylene glycol diacrylate, 1,6-hexanediol diacrylate, neopentyl glycol diacrylate, propylene glycol diacrylate, polypropylene glycol diacrylate, 2-hydroxy-1,3-diacryloxypropane, 2,2-bis[4-(acryloxy)phenyl]propane, 2,2-bis[4-(acryloxyethoxy)phenyl]propane, 2,2-bis[4-(acryloxyethoxy-diethoxy)phenyl]propane, 2,2-bis[4-(acryloxyethoxy·poly-ethoxy)phenyl]propane, hydroxypivalic acid neopentyl glycol diacrylate, 1,4-butanediol diacrylate, dicyclopentanyl diacrylate, dipentaerythritol hexaacrylate, dipentaerythritol monohydroxypentaacrylate, ditrimethylolpropane tetraacrylate, pentaerythritol triacrylate, tetrabromobisphenol A diacrylate, triglycerol diacrylate, trimethylolpropane triacrylate, tris(acryloxyethyl) isocyanurate, ethylene glycol dimethacrylate, diethylene glycol dimethacrylate, triethylene glycol dimethacrylate, tetraethylene glycol dimethacrylate, polyethylene glycol dimethacrylate, propylene glycol dimethacrylate, polypropylene glycol dimethacrylate, 1,3-butylene glycol dimethacrylate, 1,4-butanediol dimethacrylate, 1,6-hexanediol dimethacrylate, neopentyl glycol dimethacrylate, 2-hydroxy-1,3-dimethacryloxypropane, 2,2-bis[4-(methacryloxy)phenyl]propane, 2,2-bis[4-(methacryloxyethoxy)phenyl]propane, 2,2-bis[4-(methacryloxyethoxydiethoxy)phenyl]propane, 2,2-bis[4-(methacryloxyethoxypolyethoxy)phenyl]propane, tetrabromobisphenol A dimethacrylate, dicyclopentanyl dimethacrylate, dipentaerythritol hexamethacrylate, glycerol dimethacrylate, hydroxypivalic acid neopentyl glycol dimethacrylate, dipentaerythritol monohydroxypentamethacrylate, ditrimethylolpropane tetramethacrylate, pentaerythritol trimethacrylate, pentaerythritol tetramethacrylate, triglycerol dimethacrylate, trimethylolpropane trimethacrylate, tris-(methacryloxyethyl) isocyanurate, allyl methacrylate, divinylbenzene, diallyl phthalate, diallyl terephthalate, diallyl isophthalate, diethylene glycol bisallylcarbonate and the like.

As a monomer used for synthesizing the polymer which is a main component of the microcapsule wall material, there can be further used a monomer represented by the following general formula (7), within the range not impairing the effect of the invention.

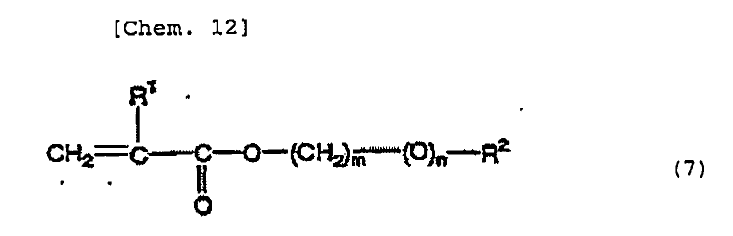

wherein R¹ represents a hydrogen atom or a methyl group, R² represents a t-butyl group, an alicyclic hydrocarbon group, an aromatic hydrocarbon group or a heterocyclic group, m represents an integer of 0 to 3, and n represents an integer of 0 or 1.
In the general formula (7), the alicyclic hydrocarbon groups represented by R² include a cycloalkyl group, a cycloalkenyl group, an isobornyl group, a dicyclopentanyl group, a dicyclopentenyl group, an adamantane group and the like, and the heterocyclic groups include a tetrahydrofuran group and the like.

Specific examples of the monomers represented by the general formula (7) include the following:

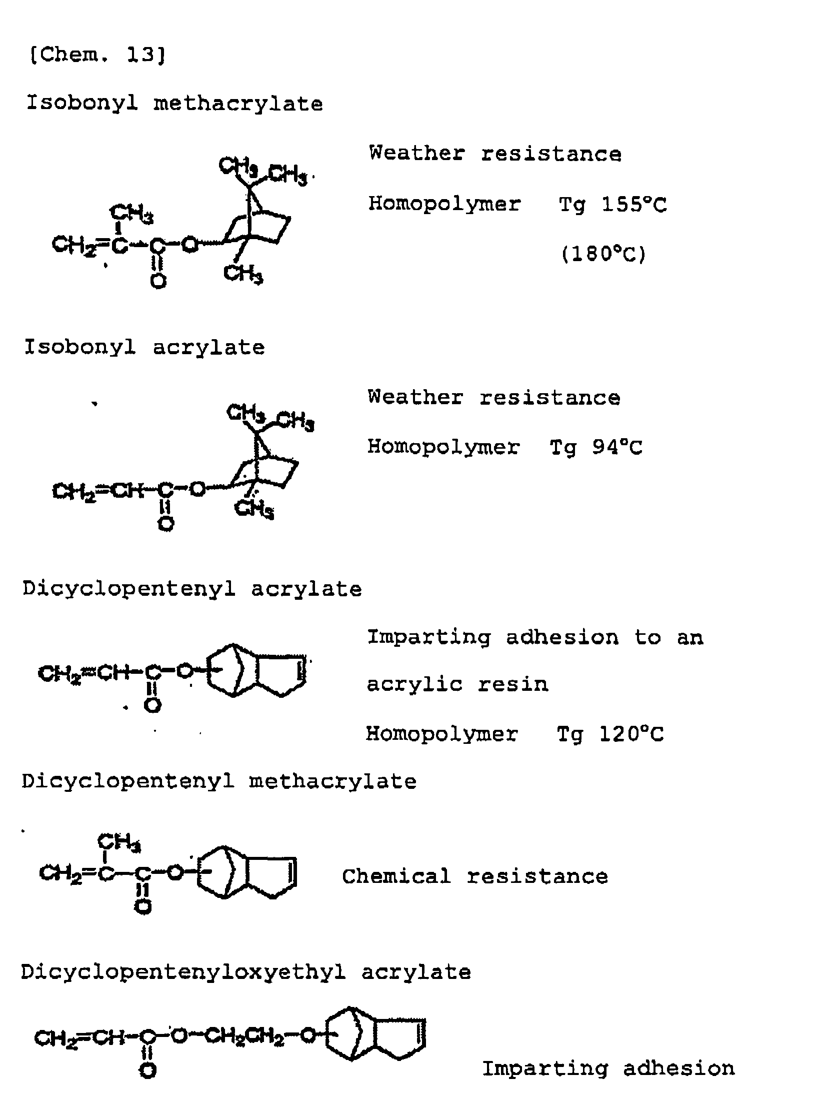

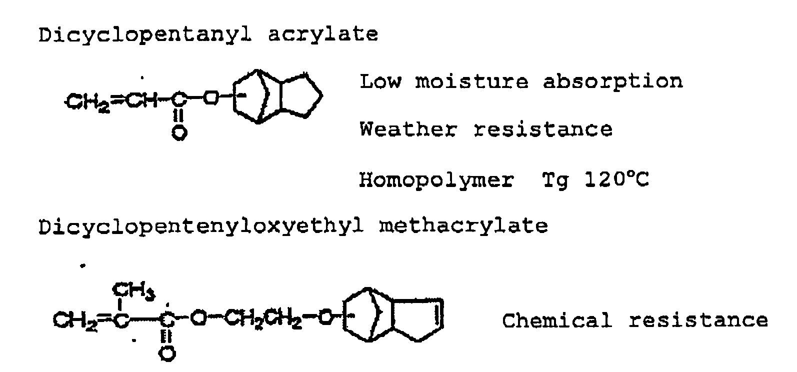

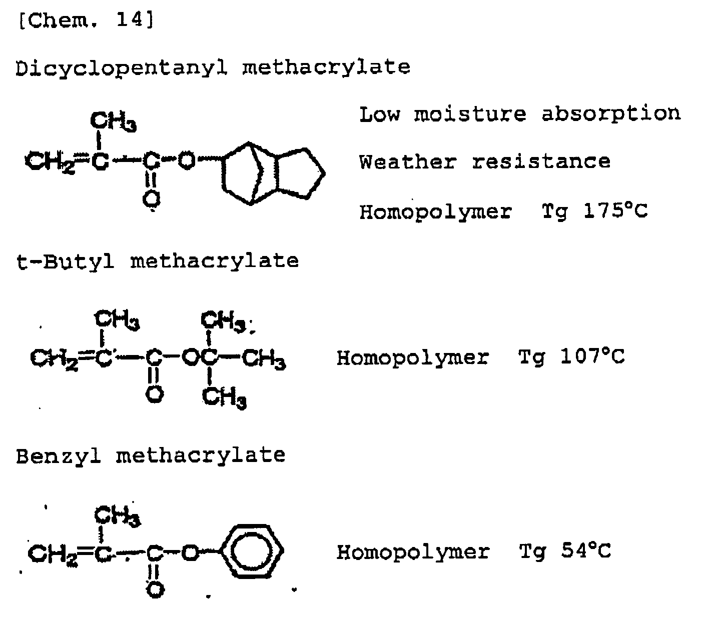

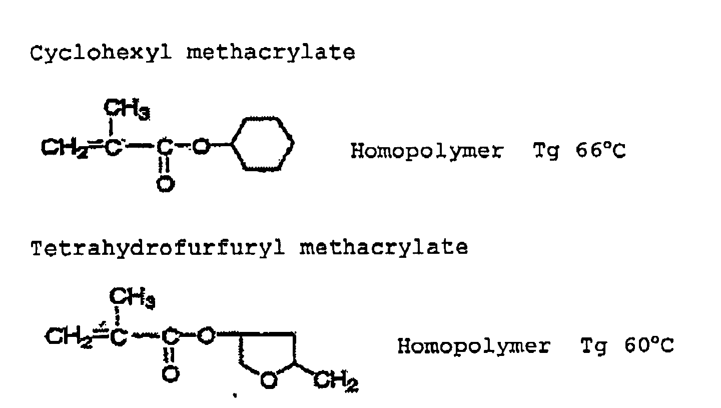

The R² group which is a "bulky" group derived from the monomer represented by general formula (7) is introduced into the polymer of the microcapsule wall material, thereby decreasing the flexibility of a molecule of the polymer, that is to say, restraining the movability of the molecule. Thus, the mechanical strength and heat resistance of the polymer can be improved. Accordingly, printed mater printed by using the ink composition containing the microencapsulated pigment covered with that polymer can have excellent rubbing resistance and durability.
Further, the existence of the R² group, the "bulky" group, in the polymer constituting the microcapsule wall material can inhibit the organic solvent in the ink composition from penetrating the inside of the polymer, thereby being able to make excellent the solvent resistance of the microencapsulated color material. Accordingly, ejection properties of the ink composition in which the water-soluble organic solvent coexists from an ink jet head, dispersibility of the color material and storage stability can be improved.

The polymer having repeating structural units derived from the crosslinkable monomer and the polymer having repeating structural units derived from the monomer represented by general formula (7) are high in Tg, and have the advantages of being excellent in mechanical strength, heat resistance and solvent resistance.
However, the microencapsulated pigment particles covered with the polymer which contains in large amounts such a crosslinkable monomer and/or the monomer represented by the general formula (7) becomes difficult to adhere to a recording medium in some cases, because of low plasticity of the polymer. As a result, fixability of the microencapsulated pigment particles to the recording medium and rubbing resistance of the resulting images are deteriorated in some cases. It is therefore preferred that the amount of theses monomers used is appropriately adjusted.

On the other hand, of the hydrophobic monomers, the polymer having repeating structural units derived from a monomer having a long-chain alkyl group has flexibility. Accordingly, the microcapsule wall material polymer having excellent mechanical strength and excellent solvent resistance together with preferred plasticity can be synthesized by appropriately adjusting the ratio of repeating structural units derived from the crosslinkable monomer and/or repeating structural units derived from the monomer represented by general formula (7) to repeating structural units derived from the monomer having a long-chain alkyl group. The ink composition containing the microencapsulated color material particles covered with such a polymer is excellent in ejection stability from the ink jet head, and also excellent in dispersion stability and long-term storage stability, even when it contains the water-soluble organic solvent. Further, the ink composition containing the microencapsulated color material particles is good in adhesion to the recording medium, and the images of the printed matter printed by using this ink composition are excellent in rubbing resistance, durability and solvent resistance.

### [Polymerization Initiators]

The polymer constituting the microcapsule wall material of the microencapsulated color material particles is obtained by polymerizing the polymerizable surfactants and the hydrophilic monomer-containing monomer, as described above. This polymerization reaction can be conducted using a known polymerization initiator, and particularly, a radical polymerization initiator is preferably used. The polymerization initiators include a water-soluble polymerization initiator and an oil-soluble polymerization initiator.

### [Water-Soluble Polymerization Initiators]

The water-soluble polymerization initiators include, for example, azo compound-based initiators such as 2,2'-azobis(2-amidinopropane) dihydrochloride, 4,4'-azobis(4-cyanovaleric acid), 2,2'-azobis[2-(2-imidazolin-2-yl)propane] dihydrochloride, 2,2'-azobis[2-(2-imidazolin-2-yl)propane] disulfate dihydrate, 2,2'-azobis[N-(2-carboxyethyl)-2-methylpropionamide], 2,2'-azobis{2-[1-(2-hydroxyethyl)-2-imidazolin-2-yl]propane} dihydrochloride, 2,2'-azobis(1-imino-1-pyrrolidino-2-methylpropane) dihydrochloride, 2,2'-azobis{2-methyl-N-[2-(1-hydroxybutyl)propionamide}, 2,2'-azobis[2-(5-methylimidazolin-2-yl)pxopane] dihydrochloride and 2,2'-azobis[2-(3,4,5,6-tetrahydropyrimidine-2-yl)propane] dihydrochloride, oxidizing agents alone such as potassium persulfate, sodium persulfate, ammonium persulfate and hydrogen peroxide, and redox initiators in combination with water-soluble reducing agents such as sodium sulfite, sodium hyposulfite, ferrous sulfate, ferrous nitrate, sodium formaldehyde sulfoxylate and thiourea.

### [Oil-Soluble Polymerization Initiators]

The oil-soluble polymerization initiators include azo compound-based initiators such as 2,2'-azobisisobutyronitrile, 1,1'-azobiscyclohexane-1-carbonitrile, 2,2'-azobis-4-methoxy-2,4-dimethylvaleronitrile, 2,2'-azobis-2,4-dimethylvaleronitrile, dimethyl-2,2'-azobis(2-methyl-propionate), 1,1'-azobis(1-acetoxy-1-phenylethane) and 2,2'-azobis(4-methoxy-2,9-dimethylvaleronitrile), peroxide polymerization initiators such as acetylcyclohexylsulfonyl peroxide, isobutylyl peroxide, diisopropyl peroxydicarbonate, di-2-ethylhexyl peroxydicarbonate, 2,4-dichlorobenzoyl peroxide, t-butyl peroxypivalate, 3,5,5-trimethylhexanonyl peroxide, octanoyl peroxide, decanoyl peroxide, lauroyl peroxide, stearoyl peroxide, propionitrile peroxide, succinic acid peroxide, acetyl peroxide, t-butylperoxy-2-ethyl hexanoate, benzoyl peroxide, parachlolobenzoyl peroxide, t-butyl peroxyisobutyrate, t-butyl peroxymaleic acid, t-butyl peroxylaurate, cyclohexanone peroxide, t-butyl peroxyisopropylcarbonate, 2,5-dimethyl-2,5-dibenzoylperoxyhexane, t-butyl peroxyacetate, t-butyl peroxybenzoate, diisobutyl peroxyphthalate, methyl ethyl ketone peroxide, dicumyl peroxide, 2,5-dimethyl-2,5-di-t-butylperoxyhexane, t-butylcumyl peroxide, t-butyl hydroperoxide, di-t-butyl peroxide, diisopropylbenzene hydroperoxide, paramenthane hydroperoxide, pinane hydroperoxide, 2,5-dimethylhexane-2,5-dihydroperoxide and cumene peroxide, and oil-soluble redox polymerization initiators in which oil-soluble peroxides such as hydroperoxides (tert-butyl hydroxyperoxide, cumene hydroxyperoxide and the like), dialkyl peroxides (lauroyl peroxide and the like) and diacyl peroxides (benzoyl peroxide and the like) are used in combination with oil-soluble reducing agents such as tertiary amines (triethylamine, tributylamine and the like), naphthenates, mercaptans (mercaptoethanol, laurylmercaptan and the like) and organic metal compounds (triethyl aluminum, triethyl boron, diethyl zinc and the like).

In the production of the microencapsulated color material of the invention, when, for example, the pigment is used as the color material and, for example, the polymer having a cationic group and a hydrophobic group is used as the polymer which is allowed to be adsorbed on the surfaces of the pigment particles, (1) first, the first polymerizable surfactant having an anionic group, a hydrophobic group and a polymerizable group (anionic polymerizable surfactant) to an aqueous dispersion of the pigment particles to which the polymer have been adsorbed, followed by mixing. The anionic group of the anionic polymerizable surfactant is ionically bonded to the cationic group on the surface of the pigment to which the polymer have been adsorbed, and fixed.
(2) Then, the comonomer copolymerizable with the anionic polymerizable surfactant, more specifically the second polymerizable surfactant having an anionic group, a hydrophobic group and a polymerizable group (anionic polymerizable surfactant) and/or an anionic group-containing hydrophilic monomer and/or a hydrophobic monomer, and the polymerization initiator are added, followed by mixing to perform emulsion polymerization. In order to mixing well these respective raw materials, it is preferred that the mixed dispersion is irradiated with an ultrasonic wave.
According to such a procedure, the microencapsulated pigment covered with the polymer having repeating structural units derived from the anionic polymerizable surfactant and repeating structural units derived from the anionic polymerizable surfactant and/or an anionic group-containing hydrophilic monomer and/or a hydrophobic monomer can be suitably produced.

In the step (1), the amount of the first polymerizable surfactant added to the dispersion in which the pigment to which the polymer has been adsorbed is dispersed in water is preferably within the range of 0.8 to 1.5 times the molar quantity based on the number of moles of the cationic groups of the polymer (the number of moles of the cationic groups per gram of the polymer [mol/g]), and more preferably within the range of 1.0 to 1.2 times the molar quantity. Addition of the anionic polymerizable surfactant in an amount of 0.8 time or more the molar quantity based on the number of moles of the cationic groups hydrophobilizes the surfaces of the pigment particles, thereby being able to allow the second polymerizable surfactant and/or hydrophilic monomer added in the step (2) to be efficiently adsorbed by the surfaces of the particles.
On the other hand, by adjusting the amount of the anionic polymerizable surfactant added to 1.5 times or less the molar quantity based on the number (quantity) of moles of the cationic groups of the polymer on the surfaces of the pigment particles, the amount of free matter of the second polymerizable surfactant and/or hydrophilic monomer added in the step (2), which is not adsorbed to the surface of the pigment, can be inhibited.

Further, the amounts of the second polymerizable surfactant and/or hydrophilic monomer added to the dispersion in the step (2) are each preferably within the range of 0.8 to 1.5 times the molar quantity based on the number of moles of the polymerizable surfactant, and more preferably within the range of 1.0 to 1.2 times the molar quantity. Addition of the second polymerizable surfactant in an amount of 0.8 time or more the molar quantity forms the following admicell, thereby being able to obtain the desired microencapsulated pigment by the subsequent polymerization reaction. Further, adjustment to 1.5 times the molar quantity can inhibit the occurrence of polymer particles having no pigment particles as a core material. This is because the amount of the anionic polymerizable surfactant relating to the formation of the admicell can be decreased.
At this time, in addition to the hydrophilic monomer added alone or together with the second polymerizable surfactant, there can be used together the monomer selected from the crosslinking agent, the compound represented by the general formula (7) and the additional known polymerizable monomer, within the range not impairing the effect of the invention. When the polymerizable monomer is added to the aqueous dispersion, followed by mixing, it is also preferred that the aqueous dispersion is irradiated with an ultrasonic wave.

Thereafter, the anionic polymerizable surfactant or the cationic polymerizable surfactant is further added to the aqueous dispersion, followed by mixing.
According to the above steps, it is deduced that the surfactant is electrostatically adsorbed to the cationic group of the copolymer having the cationic group adsorbed to the surface of the pigment particle, that the hydrophobic monomer is further localized on the outside thereof, and that the anionic polymerizable surfactant or cationic polymerizable surfactant is further arranged on the outside thereof with the hydrophilic groups (anionic groups or cationic groups) thereof orientated toward the side of an aqueous phase, thereby forming the admicell.

When the microencapsulated pigment excellent in dispersion stability in the aqueous medium can be obtained without irradiating the aqueous dispersion with an ultrasonic wave in the polymerization reaction, the ultrasonic irradiation is not necessarily required.

The polymerization initiator may be added all at once, in parts or continuously to the aqueous dispersion heated to a temperature at which the polymerization initiator is activated, in which the admicells have been formed. Further, after addition of the polymerization initiator, the aqueous dispersion may be heated to a temperature at which the polymerization initiator is activated. In the invention, it is preferred that the water-soluble polymerization initiator is used as the polymerization initiator, and that an aqueous solution obtained by dissolving this in pure water is added dropwise to the aqueous dispersion in a reaction vessel. The polymerization initiator added cleaves to generate an initiator radical, which attacks the polymerizable group of the polymerizable surfactant or the polymerizable group of the polymerizable monomer, whereby the polymerization reaction occurs.
The polymerization temperature and the polymerization reaction time vary depending on the kind of polymerization initiator used and the kind of polymerizable monomer. However, it is easy to appropriately set preferred polymerization conditions. In general, the polymerization temperature is preferably within the range of 40°C to 90°C, and the polymerization time is preferably from 3 hours to 12 hours.

In the polymerization reaction, the anionic polymerizable surfactants, crosslinkable monomers, compounds represented by the general formula (7) and additional known polymerizable monomers can be each used alone or as a combination of two or more thereof. Further, the emulsion polymerization reaction is conducted by using the anionic polymerizable surfactant and/or the cationic polymerizable surfactant, so that the emulsified state of the aqueous dispersion containing the raw material monomers is good in many cases, even when an emulsifier is not used. Accordingly, the use of the emulsifier is not necessarily required. However, at least one kind selected from the group consisting of known anionic, nonionic and cationic emulsifiers can also be used as needed.

When the surface of the microencapsulated color material obtained by the polymerization reaction has the anionic group, it is preferred that the pH of the resulting aqueous dispersion is adjusted to the range of 7.0 to 9.0, and that filtration is further performed. The filtration is preferably ultrafiltration.

According to the emulsion polymerization process, it is conceivable that the anionic polymerizable surfactant is first allowed to be adsorbed by the cationic group of the cationic polymer adsorbed to the surface of the pigment particle. Then, the polymerizable monomer containing the hydrophobic monomer is added, and further, the anionic polymerizable surfactant or the cationic polymerizable surfactant is added, followed by treatment by ultrasonic irradiation. The arrangement form of the polymerizable surfactants and polymerizable monomer existing around the pigment particle is extremely highly controlled by this treatment, and it is conceivable that a state in which the hydrophilic groups (anionic groups or cationic groups) are orientated toward the aqueous phase at the outermost layer is formed. Then, by subjecting this aqueous dispersion to emulsion polymerization, the monomer is conceivably polymerized to the polymer as the state in which monomer molecules are highly controlled around the pigment particle is kept, thereby obtaining the microencapsulated pigment of the invention.
The use of the emulsion polymerization process of the invention can inhibit the generation of water-soluble oligomers and polymers which are by-products. The microencapsulated pigment dispersion having low viscosity is obtained thereby, and a purification process such as ultrafiltration can be easily performed. Moreover, the ink composition using the microencapsulated pigment obtained by the polymerization process is excellent in dispersion stability and ejection stability from a recording head, is hard to blur to plain paper, and can provide printed images having high color development and high density.

The microencapsulated color material of the invention obtained as described above has high dispersion stability to the aqueous solvent. This is possibly because the color material particle is completely covered with the polymer layer (no portion is not covered) and the hydrophilic groups of the polymer layer of the microcapsule wall material are regularly orientated toward the aqueous phase.

When the pigment particles whose surfaces have adsorbed the anionic group-containing polymer is used, the cationic polymerizable surfactant is used as the first polymerizable surfactant, and the anionic polymerizable surfactant or the cationic polymerizable surfactant and/or the hydrophilic monomer are used as the second polymerizable surfactant. Other raw materials such as the polymerization initiator, operations such as ultrasonic irradiation, polymerization conditions and the like are the same as with the pigment particles whose surfaces have adsorbed the cationic group-containing polymer.

The microencapsulated color material has a form in which the surfaces of the color material particles are covered with the polymer which is also the microcapsule wall material. However, before polymerization or after the polymerization reaction, an antioxidant, a plasticizer and the like may also be added to the aqueous dispersion to allow those additives to be contained in the polymer as desired. As such an antioxidant, plasticizer and the like, there can be used known materials.

In the microencapsulated color material of the invention thus obtained, the color material particles (core material) are allowed to be adsorbed on the surface of the color material, for example, the cationic polymer (A) is further covered with the microcapsule wall material mainly comprising the polymer (B). This polymer (B) comprises (i) repeating structural units derived from the polymerizable surfactant having an anionic group, a hydrophobic group and a polymerizable group, and having a charge opposite to that of the cationic group of the cationic polymer (polymer (A)) adsorbed by the surface of the color material, (ii) repeating structural units derived from the polymerizable monomer copolymerizable with the polymerizable surfactant, and further (iii) repeating structural units derived from the polymerizable surfactant having an ionic group, a hydrophobic group and a polymerizable group, and/or the hydrophilic monomer.

The particle size of the microencapsulated color material of the invention thus obtained is preferably 400 nm or less, more preferably 300 nm or less, and particularly preferably from 10 to 200 nm.
The particle size of the microencapsulated color material can be measured with a laser Doppler system size distribution analyzer. Further, the particle size of the microencapsulated color material of the invention can be controlled to the desired particle size by irradiating a reaction mixture with an ultrasonic wave under specified conditions (mainly the difference in irradiation energy, for example, controllable by the frequency and irradiation time) before the initiation of the polymerization reaction, the difference whether the reaction mixture is irradiated with the ultrasonic wave during the polymerization reaction or not, control of the irradiation conditions when the reaction mixture is irradiated with the ultrasonic wave during the polymerization reaction, and the like.

The microencapsulated color material of the invention obtained as described above is an aqueous dispersion, and a desired material is further mixed therewith to prepare the ink composition of the invention. It is preferred that unreacted monomers (polymerizable compounds used such as the ionic polymerizable surfactants and reactive monomers, and the like) contained in the aqueous dispersion of the microencapsulated color material are previously removed for purification to use.
The aqueous dispersion containing the microencapsulated color material is subjected to purification treatment to reduce the concentration of the unreacted monomers, whereby there are obtained the advantages that images (the recorded matter of the invention) prepared on plain paper by using the ink jet recording ink using the microencapsulated color material of the invention has excellent saturation, that the print density (printing density) can also be increased, and further that the occurrence of blurring in images is also inhibited. Furthermore, when this ink is used on exclusive media for ink jet recording, particularly on glossy media for ink jet recording, the resulting images further have good gloss.

The microencapsulated color material of the invention can be used in the ink composition, and particularly, it is preferred as the color material used in the ink jet recording ink.

The ink composition using the microencapsulated color material of the invention will be described below.

### [Ink Compositions]

The ink composition of the invention is an aqueous ink composition, in which the microencapsulated color material of the invention is dispersed in an aqueous medium. The content of the microencapsulated color material in the ink composition is preferably from 1 to 20% by weight, and more preferably from 3 to 15% by weight, based on the total weight of the ink composition. In particular, in order to obtain high print density and high color developability, the content is preferably from 5 to 15% by weight.

Further, a solvent used for the ink composition of the invention preferably contains water and a water-soluble organic solvent, and can further contain another component as desired.

In order to impart water retention and wettability to the ink jet recording ink composition, a wetting agent comprising a high boiling water-soluble organic solvent is preferably added to the ink composition of the invention. As such a high boiling water-soluble organic solvent, a water-soluble organic solvent having a boiling point of 180°C or higher is preferred.
Specific examples of the water-soluble organic solvents having a boiling point of 180°C or higher which can be used in the invention include ethylene glycol, propylene glycol, diethylene glycol, pentamethylene glycol, trimethylene glycol, 2-butene-1,4-diol, 2-ethyl-1,3-hexanediol, 2-methyl-2,4-pentanediol, tripropylene glycol, polyethylene glycol having a molecular weight of 2,000 or less, 1,3-propylene glycol, isopropylene glycol, isobutylene glycol, glycerol, mesoerythritol and pentaerythritol.

It is more preferred that the high boiling water-soluble organic solvent used in the invention has a boiling point of 200°C or higher. These can be used either alone or as a mixture of two or more thereof. Addition of the high boiling water-soluble organic solvent to the ink composition makes it possible to obtain the ink jet recording ink which retains flowability and redispersibility for a long period of time even when it is allowed to stand in an open state (a state in which the ink is in contact with air at room temperature).
Further, in such an ink composition, clogging of ink jet nozzles becomes hard to occur during printing or on restarting after the interruption of printing, so that high ejection stability is obtained.
The total content of the water-soluble organic solvents including these high boiling water-soluble organic solvents is preferably from about 10 to about 50% by weight, and more preferably from 10 to 30% by weight, based on the total weight of the ink composition.

To the ink composition of the invention, there can be added one or more kinds of polar solvents selected from the group consisting of 2-pyrrolidone, N-methylpyrrolidone, ε-caprolactam, dimethyl sulfoxide, sulfolane, morpholine, N-ethylmorpholine and 1,3-dimethyl-2-imidazolidinone. Addition of the polar solvent provides the effect of improving dispersibility of the microencapsulated pigment particles, and can improve ejection stability of the ink.
The content of these polar solvents is preferably from 0.1 to 20% by weight, and more preferably from 1 to 10% by weight, based on the total weight of the ink composition.

In order to accelerate penetration of the aqueous solvent into the recording medium, it is preferred that the ink composition of the invention further contains a penetrant. Prompt penetration of the aqueous solvent into the recording medium can provide recorded matter having images with less blurring.
As such a penetrant, there is preferably used an alkyl ether of a polyhydric alcohol (also referred to as a glycol ether) and/or a 1,2-alkyldiol. The alkyl ethers of polyhydric alcohols include, for example, ethylene glycol monomethyl ether, ethylene glycol monoethyl ether, ethylene glycol monobutyl ether, ethylene glycol monomethyl ether acetate, diethylene glycol monomethyl ether, diethylene glycol monoethyl ether, ethylene glycol mono-n-propyl ether, ethylene glycol mono-iso-propyl ether, diethylene glycol mono-iso-propyl ether, ethylene glycol mono-n-butyl ether, diethylene glycol mono-n-butyl ether, triethylene glycol mono-n-butyl ether, ethylene glycol mono-t-butyl ether, diethylene glycol mono-t-butyl ether, 1-methyl-1-methoxybutanol, propylene glycol monomethyl ether, propylene glycol monoethyl ether, propylene glycol mono-t-butyl ether, propylene glycol mono-n-propyl ether, propylene glycol mono-iso-propyl ether, dipropylene glycol monomethyl ether, dipropylene glycol monoethyl ether, dipropylene glycol mono-n-propyl ether, dipropylene glycol mono-iso-propyl ether, propylene glycol mono-n-butyl ether, dipropylene glycol mono-n-butyl ether and the like. The 1,2-alkyldiols include, for example, 1,2-pentanediol, 1,2-hexanediol and the like. In addition to these, the penetrants include diols of straight-chain hydrocarbons such as 1,3-propanediol, 1,4-butanediol, 1,5-pentanediol, 1,6-hexanediol, 1,7-heptanediol and 1,8-octanediol. The penetrant can be appropriately selected therefrom and used in the ink composition of the invention.

In particular, in an embodiment of the invention, it is preferred that at least one selected from propylene glycol monobutyl ether, dipropylene glycol monobutyl ether, diethylene glycol monobutyl ether, triethylene glycol monobutyl ether, 1,2-pentanediol and 1,2-hexanediol is used as the penetrant.
The content of these penetrants is preferably from 1 to 20% by weight, and more preferably from 1 to 10% by weight, in the total amount, based on the total weight of the ink composition. By adjusting the content of the penetrant to 1% by weight or more, the effect of improving penetrability of the ink composition into the recording medium is obtained. Further, by adjusting to 20% by weight or less, the occurrence of blurring in images printed using this ink composition can be inhibited, and the viscosity of the ink composition can be adjusted so as not to become too high. Furthermore, in particular, when the 1,2-alkyldiol such as 1,2-pentanediol or 1,2-hexanediol is used in the ink composition, drying properties of the ink composition after printing become good, and blurring in images can be decreased.

Further, by allowing glycerol to be contained in the ink composition of the invention, clogging of the ink jet nozzles at the time when the ink composition is used in ink jet recording becomes hard to occur, and further, storage stability of the ink composition itself can also be enhanced.
Furthermore, when the glycol ether is used in the ink composition of the invention, it is preferred that an acetylene glycol-based surfactant described later is used in combination therewith.

In addition, it is preferred that the ink composition of the invention contains a surfactant, particularly an anionic surfactant and/or a nonionic surfactant.
Specific examples of the anionic surfactants include an alkanesulfonate, an α-olefinsulfonate, an alkylbenzene-sulfonate, an alkylnaphthalenesulfonic acid, an acylmethyltaurine acid, a dialkylsulfosuccinic acid; an alkylsulfuric ester salt, a sulfated oil, a sulfated olefin, a polyoxyethylene alkyl ether sulfuric ester salt, a fatty acid salt, an alkylsarcosine salt, an alkylphosphoric ester salt, a polyoxyethylene alkyl ether phosphoric ester salt, a monoglyceride phosphoric ester salt and the like.
Further, specific examples of the nonionic surfactants include a polyoxyethylene alkyl ether, a polyoxyethylene alkyl phenyl ether, a polyoxyethylene alkyl ester, a polyoxyethylene alkylamide, a glycerol alkyl ester, a sorbitan alkyl ester, a sugar alkyl ester, a polyhydric alcohol alkyl ether, an alkanolamine fatty acid amide and the like.

More specifically, the anionic surfactants include sodium dodecylbenzenesulfonate, sodium laurate, an ammonium salt of a polyoxyethylene alkyl ether sulfate and the like. Specific examples of the nonionic surfactants include ether-based compounds such as polyoxyethylene nonyl phenyl ether, polyoxyethylene octyl phenyl ether, polyoxyethylene dodecyl phenyl ether, a polyoxyethylene alkyl allyl ether, polyoxyethylene oleyl ether, polyoxyethylene lauryl ether, a polyoxyethylene alkyl ether and a polyoxyalkylene alkyl ether; and ester-based compounds such as polyoxyethylene oleic acid, polyoxyethylene oleic acid ester, polyoxyethylene distearic acid ester, sorbitan laurate, sorbitan monostearate, sorbitan monooleate, sorbitan sesquioleate, polyoxyethylene monooleate and polyoxyethylene stearate.

In particular, it is desirable that the ink jet recording ink according to an embodiment of the invention contains an acetylene glycol-based surfactant and/or an acetylene alcohol-based surfactant. The aqueous solvent contained in the ink composition becomes easy to penetrate into the recording medium thereby, so that images with little blurring to various recording media can be printed.
Preferred specific examples of the acetylene glycol surfactants used in the invention include a compound represented by the following formula (8):

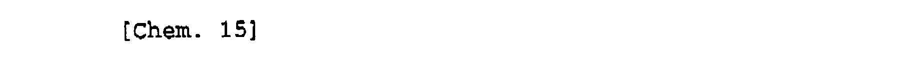

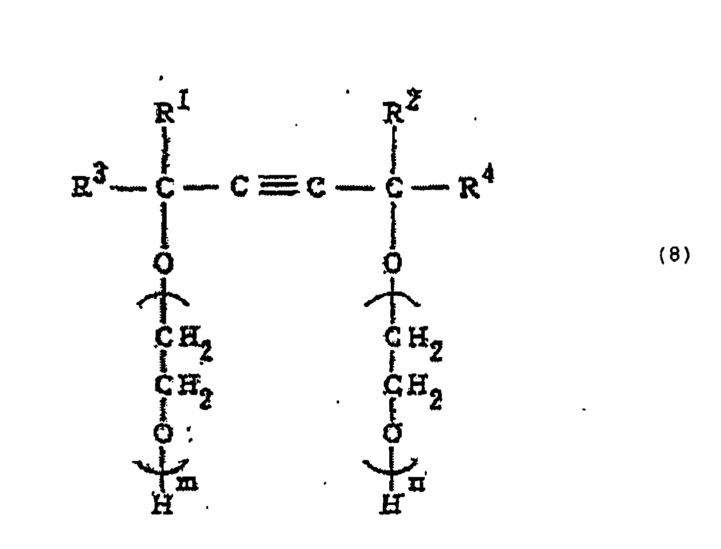

In the formula (8), m and n are each a number satisfying 0≤m+n≤50, and R¹, R², R³ and R⁴ are each independently an alkyl group (preferably an alkyl group having 6 or less carbon atoms).
The particularly preferred compounds represented by the formula (8) include 2,4,7,9-tetramethyl-5-decyne-4,7-diol, 3,6-dimethyl-4-octyne-3,6-diol, 3,5-dimethyl-1-hexyne-3-ol and the like. As the compounds represented by the formula (8), it is also possible to utilize commercial products commercially available as the acetylene glycol-based surfactants. Specific examples thereof include Surfynol 104, 82, 465, 485 and TG (all are trade names, available from Air Products and Chemicals, Inc.), and Olfine STG and Olfine E1010 (the above are trade names, manufactured by Nissin Chemical Industry Co., Ltd.). The acetylene alcohol-based surfactants include Surfynol 61 (trade name, available from Air Products and Chemicals, Inc.) and the like.

These acetylene glycol-based surfactants and/or acetylene alcohol-based surfactants are used preferably in an amount ranging from 0.01 to 10% by weight, and more preferably in an amount ranging from 0.1 to 5% by weight, based on the total weight of the ink composition.

Fine polymer particles can be further added to the ink composition of the invention. The fine polymer particles are preferably in the following forms of 1) and 2):
1) Fine polymer particles having ionic groups on their surfaces and a volume average particle size of 10 to 200 nm; and
2) Fine polymer particles having on their surfaces ionic groups of the same kind as the ionic group on the surface of the microencapsulated pigment of the invention, and a volume average particle size of 10 to 200 nm.

As described above, the microencapsulated color material covered with the microcapsule wall material mainly comprising the polymer having repeating structural units derived from the crosslinkable monomer and/or the polymer having repeating structural units derived from the monomer represented by general formula (7) has high mechanical strength, heat resistance and solvent resistance, but becomes insufficient in plasticity of the polymer, which tends to cause fixability to the recording medium and heat resistance to decrease. However, even when the plasticity of the microcapsule wall material of the microencapsulated color material is insufficient, the combined use thereof with the above-mentioned fine polymer particles makes it possible to cover the microencapsulated color material with the fine polymer particles in images formed on the recording medium by using the resulting ink composition, which can enhance fixability of the images to the recording medium and rubbing resistance of the images.

As the fine polymer particles, ones having film forming properties are particularly preferred.
"Having film forming properties" as used herein means that when the fine polymer particles are dispersed in water to form an aqueous emulsion and the water of this aqueous emulsion is evaporated, a film of the polymer can be formed. The ink composition of the invention containing the fine polymer particles having film forming properties has the property of forming the film of the polymer with evaporation of solvent components thereof. This film of the polymer can fix the microencapsulated pigment in the ink more firmly to a surface of the recording medium. This can form the images having more excellent rubbing resistance and water fastness.

In order for the fine polymer particles to have film forming properties, the glass transition point of that polymer is preferably 30°C or lower, more preferably 15°C or lower, and particularly preferably 10°C or lower. The glass transition temperature of the polymer can be adjusted within the preferred temperature range by appropriately selecting the kind or composition ratio of monomer used. This is a method well known to one skilled in the art.
In the invention, the glass transition temperature obtained by temperature rise measurement with a differential scanning calorimeter (DSC) has been used. That is to say, in a differential thermal curve obtained by the temperature rise measurement with the differential scanning calorimeter, the temperature at an intersection of a tangential line drawn from a bottom of an endothermic peak to an endothermic initiation point and a base line has been taken as the glass transition temperature (Tg).

When printing is performed on the recording medium such as plain paper or an exclusive medium for ink jet recording by using the ink composition containing such fine polymer particles and the microencapsulated color material of the invention, the aqueous medium in the ink composition penetrates into the recording medium to cause the polymer particles and the microencapsulated color material particles to approach. The fine polymer particles and/or the microencapsulated color material particles covered with the polymer and/or the fine polymer particles and the microencapsulated color material particles covered with the polymer are fused to each other to form the polymer film on the recording medium with the color material encapsulated inside. This can particularly improve fixability of the images to the recording medium and rubbing resistance of the images.

Further, when the fine polymer particles have on their surfaces ionic groups of the same kind as that of the microencapsulated color material, dispersion can be stably performed without coagulation even when the fine polymer particles and the microencapsulated color material of the invention coexist in the ink composition. This is therefore preferred.
In particular, when the fine polymer particles and the microencapsulated color material of the invention coexist in the ink composition, in the case where the ionic groups of the fine polymer particles are the same kind as the ionic groups on the surfaces of the microencapsulated color material particles of the invention, dispersion stability of the respective particles in the ink composition can be made excellent.

Further, the particle size of the fine polymer particles is preferably within the range of 50 to 200 nm by the volume average particle size. When the volume average particle size exceeds 200 nm, ejection of the ink composition from an ink jet nozzle tends to easily become unstable.
Furthermore, in the ink composition of the invention, the contact angle on a Teflon (registered trade mark) plate of an aqueous emulsion in which the fine polymer particles are dispersed in an aqueous medium at a concentration of 10% by weight is preferably 70° or more. In addition, the surface tension of an aqueous emulsion in which the fine polymer particles are dispersed in an aqueous medium at a concentration of 35% by weight is preferably 40×10⁻³ N/m (40 dyne/cm, 20°C) or more. The utilization of the fine polymer particles having the characteristics as described above can prevent flight bending of ink droplets more effectively and makes it possible to print images having good image quality.

Further, better rubbing resistance and water fastness of the images can be realized by allowing the fine polymer particles having a relatively large number of ionic groups as described above on their surfaces to be contained in the ink composition. The reason for this is not clear, but is considered as follows. That is to say, when the ink composition according to the invention is adhered to the surface of the recording medium such as paper, the water and water-soluble organic solvent in the ink composition first penetrate into the recording medium, and the microencapsulated color material of the invention and the fine polymer particles remain in the vicinity of the surface of the recording medium. At this time, the ionic groups on the surfaces of the fine polymer particles act with hydroxyl groups or carboxyl groups of cellulose constituting paper fiber to cause the fine polymer particles to be firmly adsorbed on the paper fiber. The water and water-soluble organic solvent in the vicinity of the fine polymer particles adsorbed on the paper fiber further penetrate into the inside of the paper to decrease.

Furthermore, as described above, the fine polymer particles have film forming properties. Accordingly, when the water and water-soluble organic solvent disappear from the vicinities of the microencapsulated color material and the fine polymer particles, the particles are unified to encapsulate the microencapsulated color material, thereby forming a polymer layer. Thus, the state in which the color material particles are covered with the polymer is formed. This polymer can be fixed more firmly to the surface of the recording medium by the ionic group. However, this is only a hypothesis for illustrating the

### effect of the invention.

As a specific example of the fine polymer particles, preferred are those comprising a polymer containing repeating units derived from an ionic group-containing unsaturated vinyl monomer in an amount of at least 1 to 10% by weight. More preferred are those comprising a polymer containing repeating units derived from an ionic group-containing unsaturated vinyl monomer in an amount of 1 to 10% by weight, having a structure crosslinked with a crosslinkable monomer having two or more polymerizable double bonds, and containing a structure derived from a crosslinkable monomer in an amount of 0.2 to 4% by weight.
A surface of a nozzle plate of an ink jet recording apparatus becomes more difficult to wet with the ink composition by copolymerizing a polymerizable monomer having two or more polymerizable double bonds, preferably three or more polymerizable double bonds, with another polymerizable monomer in polymerization to crosslink polymer chains and using the fine polymer particles comprising such a crosslinked polymer in the ink composition. Accordingly, flight bending of ink droplets can be prevented, thereby being able to improve ejection stability.

As the fine polymer particles used in the ink composition of the invention, there can be used ones of a single particle structure having a uniform structure throughout the particle. On the other hand, it is also possible to use fine polymer particles having a core-shell structure comprising a core portion and a shell portion surrounding it and fine polymer particles having a phase separation structure. The "core-shell structure" means not only a form in which the core portion is completely covered with the shell portion, but also a form in which the core portion is partly covered. Further, the polymer of the shell portion may partly form a domain in the core particle. Furthermore, it may have a multilayer structure of three or more layers in which one or more layers different in composition are further contained between the core portion and the shell portion.

The fine polymer particles used in the invention can be produced by a known emulsion polymerization process. For example, the fine polymer particles can be obtained by emulsion polymerization of an unsaturated vinyl monomer in water in which a polymerization initiator and an emulsifier are allowed to exist.

The unsaturated vinyl monomers include an acrylic ester monomer, a methacrylic ester monomer, an aromatic vinyl monomer, a vinyl ester monomer, a vinyl cyan compound monomer, a halide monomer, an olefin monomer and a diene monomer, which are generally used in emulsion polymerization. Specific examples thereof include acrylic esters such as methyl acrylate, ethyl acrylate, isopropyl acrylate, n-butyl acrylate, isobutyl acrylate, n-amyl acrylate, isoamyl acrylate, n-hexyl acrylate, 2-ethylhexyl acrylate, octyl acrylate, decyl acrylate, dodecyl acrylate, octadecyl acrylate, cyclohexyl acrylate, phenyl acrylate, benzyl acrylate and glycidyl acrylate; methacrylic esters such as methyl methacrylate, ethyl methacrylate, isopropyl methacrylate, n-butyl methacrylate, isobutyl methacrylate, n-amyl methacrylate, isoamyl methacrylate, n-hexyl methacrylate, 2-ethylhexyl methacrylate, octyl methacrylate, decyl methacrylate, dodecyl methacrylate, octadecyl methacrylate, cyclohexyl methacrylate, phenyl methacrylate, benzyl methacrylate and glycidyl methacrylate; vinyl esters such as vinyl acetate; vinyl cyan compounds such as acrylonitrile and methacrylonitrile; halide monomers such as vinylidene chloride and vinyl chloride; aromatic vinyl monomers such as styrene, 2-methylstyrene, vinyltoluene, t-butylstyrene, chlorostyrene, vinylanisole and vinyl-naphthalene; olefins such as ethylene, propylene and isopropylene; dienes such as butadiene and chloroprene; and vinyl monomers such as vinyl ether, vinyl ketone and vinylpyrrolidone.

The ionic group-containing unsaturated vinyl monomers include an unsaturated vinyl monomer having an anionic group selected from a sulfonic acid group, a sulfinic acid group, a carboxyl group, a carbonyl group and a salt thereof. Specifically, there can be exemplified unsaturated carboxylic acids such as acrylic acid, methacrylic acid, itaconic acid, fumaric acid and maleic acid, sodium vinylsulfonate, 2-sulfoethyl methacrylate and 2-acrylamido-2-methylpropanesulfonic acid. Further, there can also be exemplified cationic group-containing unsaturated vinyl monomers such as methacrylic acid dimethylaminoethylmethyl chloride, methacrylic acid dimethylaminoethylbenzyl chloride, methacryloyloxyethyltrimethylammonium chloride, diallyldimethylammonium chloride and 2-hydroxy-3-methacryloxypropyltrimethylammonium chloride.

Further, the fine polymer particles produced by using an acrylamide or a hydroxyl group-containing vinyl monomer in addition to the monomers are used in the ink composition, thereby being able to improve ejection stability of the ink composition from an ink jet head when the ink composition is used in an ink jet recording process.
Examples of the acrylamides include acrylamide and N,N'-dimethylacrylamide. Further, examples of the hydroxyl group-containing vinyl monomers include 2-hydroxyethyl acrylate, 2-hydroxypropyl acrylate, 2-hydroxyethyl methacrylate and 2-hydroxypropyl methacrylate. One or two or more kinds of them can be used.

Further, as described above, as the polymer constituting the fine polymer particles, preferred is a polymer having a structure in which the monomer-derived structural units are crosslinked with a crosslinkable monomer having two or more polymerizable double bonds.
Examples of the crosslinkable monomers having two or more polymerizable double bonds include diacrylate compounds such as polyethylene glycol diacrylate, triethylene glycol diacrylate, 1,3-butylene glycol diacrylate, 1,6-butylene glycol diacrylate, 1,6-hexanediol diacrylate, neopentyl glycol diacrylate, 1,9-nonanediol diacrylate, polypropylene glycol diacrylate, 2,2'-bis(4-(acryloxypropyloxyphenyl)propane and 2,2'-bis(4-(acryloxydiethoxyphenyl)propane; triacrylate compounds such as trimethylolpropane triacrylate, trimethylolethane triacrylate and tetramethylolmethane triacrylate; tetraacrylate compounds such as ditrimethylol tetraacrylate, tetramethylolmethane tetraacrylate and pentaerythritol tetraacrylate; hexaacrylate compounds such as dipentaerythritol hexaacrylate; dimethacrylate compounds such as ethylene glycol dimethacrylate, diethylene glycol dimethacrylate, triethylene glycol dimethacrylate, polyethylene glycol dimethacrylate, 1,3-butylene glycol dimethacrylate, 1,4-butylene glycol dimethacrylate, 1,6-hexanediol dimethacrylate, neopentyl glycol dimethacrylate, dipropylene glycol dimethacrylate, polypropylene glycol dimethacrylate, polybutylene glycol dimethacrylate and 2,2'-bis(4-(methacryloxydiethoxyphenyl)propane; trimethacrylate compounds such as trimethylolpropane trimethacrylate and trimethylolethane trimethacrylate; methylenebisacrylamide; and divinylbenzene.

Further, the fine polymer particles having the core-shell structure can be produced using a known method, and generally by multistage emulsion polymerization or the like. For example, it is possible to produce by a method disclosed in JP-A-4-76004.
As unsaturated vinyl monomers used for the production of the fine polymer particles having the core-shell structure, there are exemplified the same monomers as described above.
Furthermore, a polymerization initiator, a surfactant, a molecular weight regulator, a neutralizing agent and the like used in emulsion polymerization of the fine polymer particles may also be used based on the known method.

In addition, the ink composition of the invention can contain a pH adjuster. When the color material particles or the surfaces of the polymer particles have anionic groups, the pH of the ink composition is adjusted preferably to 7 to 11, and more preferably to 8 to 9. As the pH adjusters, there is preferably used a basic compound. Further, when the color material particles or the surfaces of the polymer particles have cationic groups, the pH of the ink composition is adjusted preferably to 5 to 7, and more preferably to 6 to 7. As the pH adjusters, there is preferably used an acidic compound.

Specific examples of the basic compounds preferably used as the pH adjuster include alkali metal compounds such as sodium hydroxide, potassium hydroxide, lithium hydroxide, sodium carbonate, sodium hydrogencarbonate, potassium carbonate, lithium carbonate, sodium phosphate, potassium phosphate, lithium phosphate, potassium dihydrogenphosphate, dipotassium hydrogenphosphate, sodium oxalate, potassium oxalate, lithium oxalate, sodium borate, sodium tetraborate, potassium hydrogenphthalate and potassium hydrogentartrate; ammonia; amines such as methylamine, ethylamine, diethylamine, trimethylamine, triethylamine, tris(hydroxymethyl)aminomethane hydrochloride, triethanolamine, diethanolamine, diethylethanolamine, triisopropenolamine, butyldiethanolamine, morpholine and propanolamine; and the like.
Of these, addition of an alkali hydroxide compound or an alcohol amine makes it possible to improve dispersion stability of the anionic group-containing pigment particles in the ink.

Further, for the purpose of mildewproofing, antisepsis or rust prevention, one or more kinds of compounds selected from benzoic acid, dichlorophene, hexachlorophene, sorbic acid, a p-hydroxybenzoic acid ester, ethylenediaminetetraacetic acid (EDTA), sodium dehydroacetate, 1,2-benthiazoline-3-one (product name: Proxel XL (manufactured by Avecia)), 3,4-isothiazoline-3-one, 4,4-dimethyloxazolidine and the like can be added to the ink composition of the invention.
Furthermore, for the purpose of preventing nozzles of a ink jet recording head from being dried, one or more kinds selected from the group consisting of urea, thiourea and ethylene urea can also be added to the ink composition of the invention.

Another particularly preferred embodiment of the ink composition of the invention is an ink composition containing at least
(1) the microencapsulated color material,
(2) one or more kinds of compounds (penetrants) selected from the group consisting of diethylene glycol monobutyl ether, triethylene glycol monobutyl ether and an 1,2-alkyldiol having 4 to 10 carbon atoms,
(3) an acetylene glycol-based surfactant and/or an acetylene alcohol-based surfactant,
(4) glycerol, and
(5) water.

In each embodiment described above, when diethylene glycol monobutyl ether or triethylene glycol monobutyl ether of the above (2) is added as the penetrant, the amount thereof added is preferably 10% by weight or less, and more preferably 0.5 to 5% by weight, based on the total weight of the ink composition. Addition of diethylene glycol monobutyl ether or triethylene glycol monobutyl ether can improve penetrability of the ink composition into the recording medium and serves to improve print quality. In addition, diethylene glycol monobutyl ether and/or triethylene glycol monobutyl ether also has the effect of improving solubility of the acetylene glycol-based surfactant.

In each embodiment described above, when the 1,2-alkylenediol having 4 to 10 carbon atoms of the above (2) is used as the penetrant, the amount thereof added is preferably 15% or less based on the total weight of the ink composition. When the 1,2-alkyldiol having 3 or less carbon atoms is used, sufficient penetrability of the ink composition into the recording medium is not obtained. The 1,2-alkyldiol having carbon atoms exceeding 15 is unfavorable because it becomes difficult to dissolve in water.
When the amount of 1,2-alkyldiol in the ink composition exceeds 15% by weight, it is unfavorable because the viscosity of the ink composition tends to increase. Specifically, 1,2-pentanediol or 1,2-hexanediol is preferably used as the 1,2-alkyldiol. These can be used alone, or both can also be used together.
1,2-Pentanediol is preferably added in an amount ranging from 3 to 15% by weight based on the total weight of the ink composition. Good penetrability is obtained by adding 1,2-pentanediol in an amount of 3% by weight or more to the ink composition. 1,2-Hexanediol is preferably added in an amount ranging from 0.5 to 10% by weight based on the total weight of the ink composition, and the ink composition having good penetrability is obtained within the above-mentioned range.

Further, when the ink composition of each embodiment described above is used in the ink jet recording process, a solid wetting agent is preferably allowed to be contained in an amount of 3 to 20% by weight based on the total weight of the ink composition so that clogging of ink jet nozzles becomes hard to occur (clogging reliability is improved). Addition of the solid wetting agent is not limited to the above-mentioned respective embodiment, and it can be added to the ink composition using the microencapsulated pigment of the invention.

The solid wetting agent means a water-soluble substance which is solid at ordinary temperature (25°C) and has a water-retaining function. Preferred examples of the solid wetting agents include a saccharide, a sugar alcohol, a hyaluronate, trimethylolpropane and 1,2,6-hexanetriol. Examples of the saccharides include a monosaccharide, a disaccharide, an oligosaccharide (including a trisaccharide and a tetrasaccharide) and a polysaccharide. Preferred examples thereof include glucose, mannose, fructose, ribose, xylose, arabinose, galactose, aldonic acid, glucitol (sorbit), maltose, cellobiose, lactose, sucrose, trehalose, maltotriose and the like. The "polysaccharide" as used herein means a saccharide in its broad sense, and is used in the sense that it includes substances widely occurring in nature such as alginic acid, α-cyclodextrin and cellulose.

Further, derivatives of these saccharides include a reduced sugar of the above-mentioned saccharide (for example, represented by the general formula HOCH₂ (CHOH) nCH₂OH (wherein n represents an integer of 2 to 5), an oxidized sugar (for example, an aldonic acid, a uronic acid or the like), an amino acid, a thiosugar and the like. In particular, a sugar alcohol is preferred, and specific examples thereof include maltitol, sorbitol, xylitol and the like. As a hyaluronate, there can be used one commercially available as a 1% aqueous solution of sodium hyaluronate (molecular weight: 350,000). Particularly preferred examples of the solid wetting agents are trimethylolpropane, 1,2,6-hexanetriol, a saccharide and a sugar alcohol. One or two or more kinds of solid wetting agents can be added to the ink composition of the invention.

The use of the solid wetting agent in the ink composition of the invention can restrain evaporation of water by its water-retaining function, so that the ink composition does not increase in viscosity in ink composition flow paths of an ink jet printer or in the vicinities of ink jet nozzles, and film formation of the ink composition due to water evaporation becomes hard to occur. Accordingly, clogging of the nozzles becomes hard to occur. Further, the above-mentioned solid wetting agent is chemically stable, so that the quality of the ink composition can be maintained for a long period of time without decomposing in the ink composition.
Furthermore, even when the solid wetting agent is added to the ink composition, the ink composition does not wet a nozzle plate, and the ink composition can be stably ejected from the ink jet nozzles. When a compound selected from trimethylolpropane, 1,2,6-hexanetriol, a saccharide and a sugar alcohol is used as the solid wetting agent, the particularly excellent effect described above is obtained.

The total amount of the solid wetting agent added to the ink composition of the invention is preferably from 3 to 20% by weight, and more preferably from 3 to 10% by weight, based on the total weight of the ink composition. When two or more kinds of solid wetting agents are used as a mixture, the preferred combination is a combination of one or more kinds selected from a saccharide, a sugar alcohol and a hyaluronate and one or more kinds selected from trimethylolpropane and 1,2,6-hexane-triol. When the solid wetting agents are added to the ink composition by this combination, an increase in viscosity of the ink composition can be restrained. The effect of preventing clogging of the ink jet nozzles is obtained by adjusting the amount of the solid wetting agent contained in the ink composition to 3% by weight or more, and the ink composition can be stably ejected from the ink jet nozzles by adjusting the amount of the solid wetting agent contained in the ink composition to 20% by weight or less, so that the ink composition having sufficiently low viscosity can be obtained.

In the latter embodiment described above, the acetylene glycol-based surfactant and/or acetylene alcohol-based surfactant of (3) is added to the ink composition, and the total amount of these surfactants is preferably from 0.01 to 10% by weight, and particularly preferably from 0.1 to 5% by weight, based on the total weight of the ink composition.

The ink composition shown in the above-mentioned embodiment is particularly excellent in dispersion stability of the color material, and excellent in ejection stability from the ink jet head nozzles when used in the ink jet recording process. Further, no clogging of the nozzles occurs for a long period of time, which makes it possible to perform stable printing. Furthermore, this ink composition is good in drying properties of the ink after printing, when printed on the recording media such as plain paper, recycled paper and coated paper, and the use of this ink composition can provide high-quality images having no blurring, high print density and excellent color developability.

The ink jet recording process of the invention comprises ejecting droplets of the ink composition of the invention from the ink jet head to adhere the droplets to the recording medium, and the recorded matter of the invention is obtained by recording on a print medium such as paper by the ink jet recording process.
Although the invention has been described above, there are the following differences between the ink composition of the invention prepared by using the microencapsulated color material of the invention and an ink composition prepared by using a previously known color material.

In an ink composition using a pigment dispersion in which a pigment is dispersed using the surfactant or the polymer dispersant, the above-mentioned acetylene glycol-based surfactant and/or acetylene alcohol-based surfactant, and the penetrant such as diethylene glycol monobutyl ether, the dispersant is easily eliminated from the surface of the pigment by strong shear force applied when the ink is ejected through the fine ink jet nozzles, which causes deterioration of dispersibility, resulting in the tendency of ejection to become unstable.
In contrast, in the ink composition of the invention, such a phenomenon is not observed at all, and the ink composition can be stably ejected through the ink jet nozzles for a long period of time. Further, the microencapsulated pigment particles of the invention have good solvent resistance, so that it is hard to occur that the polymer of the microcapsule wall material is eliminated from the surfaces of the pigment particles due to the above-mentioned penetrant, and that the polymer swells, thereby being able to maintain a state in which the pigment particles are stably dispersed in the ink composition, for a long period of time.

Further, in the known ink composition in which the pigment dispersion obtained by dispersing the pigment using the dispersant such as the surfactant or the polymer dispersant is used, and which is improved in penetrability, the viscosity of the ink composition generally tends to increase due to the dispersant dissolved in the pigment dispersion because not all the dispersant is adsorbed by the surface of the pigment at the beginning when the pigment is dispersed in the dispersion medium, or the dispersant is eliminated from the pigment with an elapse of time after dispersion, and the viscosity of the ink composition tends to increase due to the dispersant eliminated. For this reason, the content of the pigment contained in the pigment dispersion can not be increased in many cases. When printing is performed using the pigment dispersion whose pigment content is small, particularly on plain paper or recycled paper, sufficient print density can not be obtained to fail to obtain good color developability in many cases.
In contrast, in the ink composition using the microencapsulated pigment of the invention, an increase in viscosity of the ink composition with time is extremely hard to occur. Accordingly, the ink composition using the microencapsulated pigment of the invention is easily decreased in viscosity, so that the ink composition has the advantage that more pigment particles can be contained. Thus, sufficiently high print density can be obtained, even when plain paper or recycled paper is used as the print medium.

The microencapsulated matter of the invention will be described below.
The microencapsulated matter of the invention can be produced in the same manner as with the microencapsulated color material of the invention with the exception that a pharmaceutical bulk, an inorganic compound, a metal powder, a ceramic, an organic compound or a polymer is used as the core material in place of the color material particles.
For the microencapsulated matter of the invention produced as described above, the use of a pharmaceutical bulk as the core material can provide encapsulated matter of the pharmaceutical bulk as a slow-acting drug, and encapsulated matter containing an inorganic compound as the core material is useful as inorganic-organic hybrid (composite) particles. Further, capsulated matter of polymer particles is useful as composite polymer particles, and the use of polymers having different physical properties as the core material makes it possible to hybridize these polymers. Still further, by encapsulating a liquid material as the core material, it becomes possible to powderize the liquid material.

### EXAMPLES

### <Synthesis Example> Synthesis of Cationic Polymer I:

### Poly(styrene-co-2-methacryloyloxyethyltrimethylammonium chloride)

A flask equipped with a stirrer, a reflux condenser and a nitrogen-introducing pipe was charged with 4.4 g of ethyl 2-bromoisobutyrate as an initiator, 250 g of styrene and 107 g of 2-methacryloyloxyethyltrimethylammonium chloride as monomers, 171 g of methanol, 975 g of ethanol and 226 g of water as solvents, 0.32 g of cuprous bromide as a catalyst and 0.61 g of tris(2-dimethylamino)ethylamine as a ligand, and the inside of the flask was replaced with nitrogen, followed by polymerization at 78°C for 8 hours. After the termination of the reaction, a polymerization solution was concentrated, and the polymerization solution concentrated was poured into isopropyl alcohol to precipitate a polymer. The polymer precipitated was recovered and dried under vacuum, thereby obtaining poly(styrene-co-2-methacryloyloxyethyltrimethylammonium chloride).
The number average molecular weight (Mn) of the resulting polymer was 10,500 and the molecular weight distribution (Mw/Mn) was 1.26. The structure of the above-mentioned random copolymer was confirmed by H-NMR using dimethyl sulfoxide-d6 as a solvent. The composition ratio of styrene units to 2-methacryloyloxyethyltrimethylammonium chloride units in the random copolymer, which was determined by H-NMR, was 80:20 (molar ratio).

### [Production Example 1]: [Preparation of Microencapsulated Cyan Pigment Dispersion (Dispersion A)]

Pigment Blue 15:3 (solid content: 30.3%) (92.4 g), 84 g of polymer I (a 20% aqueous solution) prepared as described above and 103.6 g of distilled water were mixed, and dispersed at 25°C for 2 hours using a bead mill self-produced by 0.5 mm-diameter zirconia beads as a medium. After the beads were removed, the pigment concentration was adjusted to 8% to obtain dispersion [1].
The resulting dispersion [1] was placed in a 500 ml tall beaker, which was immersed in ice water, and dispersed for 5 minutes with an ultrasonic homogenizer (NISSEI Corporation; US-600T; chips used: 36 mm in diameter). After the dispersion temperature was lowered to 20°C, dispersion was repeated for 5 minutes, and performed until the total dispersion time reached 60 minutes, thereby obtaining pigment dispersion [2].
Distilled water was added to the resulting dispersion [2] to dilute it twice, and then, a free polymer was removed by ultrafiltration to obtain dispersion [3].
To 98 g of this dispersion [3] (pigment concentration: 10%), 56 g of distilled water was added to dilute it, and then, 131 g of a reactive surfactant, Antox MS-60 (Nippon Nyukazai Co., Ltd.; a 20% aqueous solution), was added, followed by ultrasonic irradiation with an ultrasonic cleaner for 30 minutes. Further, 15 g of a styrene monomer was added, and 1.65 g of potassium persulfate was added as a polymerization initiator. Then, ultrasonic irradiation was performed with the ultrasonic cleaner for 10 minutes.
Subsequently, a 1 L separable flask was charged with the resulting dispersion, and nitrogen substitution was performed. Thereafter, polymerization was conducted under a nitrogen atmosphere at 70°C for 6 hours with stirring at 200 rpm. After the termination of the polymerization, the pH was adjusted to 8 with an aqueous solution of NaOH. Then, fine polymer particles were removed by ultrafiltration, and concentration was conducted, thereby obtaining dispersion A having a pigment concentration of 8%.

### [Production Example 2]: [Preparation of Microencapsulated Cyan Pigment Dispersion (Dispersion B)]

Dispersion B was obtained in the same manner as in Production Example 1 with the exception that in place of the styrene monomer, 7.5 g of benzyl methacrylate and 7.5 g of lauryl methacrylate were used as monomers to dispersion [3] obtained in Production Example 1. [Production Example 3]: [Preparation of Microencapsulated Cyan Pigment Dispersion (Dispersion C)]

Dispersion C was obtained in the same manner as in Production Example 1 with the exception that in place of the styrene monomer, 7.5 g of benzyl methacrylate, 7.5 g of lauryl methacrylate and 0.6 g of trimethylolpropane trimethacrylate were used as monomers to dispersion [3] obtained in Production Example 1.

### [Production Example 4]: [Preparation of Microencapsulated Cyan Pigment Dispersion (Dispersion D)]

Dispersion D was obtained in the same manner as in Production Example 1 with the exception that in place of the styrene monomer, 15 g of tert-butyl methacrylate was used as a monomer to dispersion [3] obtained in Production Example 1.

### [Production Example 5]: [Preparation of Microencapsulated Magenta Pigment Dispersion (Dispersion E)]

Pigment Red 122 (solid content: 28.9%) (96.9 g), 140 g of polymer I (a 20% aqueous solution) prepared as described above and 43.1 g of distilled water were mixed, and dispersed at 60°C for 8 hours using a bead mill self-produced by 0.5 mm-diameter zirconia beads as a medium. After the beads were removed, the pigment concentration was adjusted to 8% to obtain dispersion [4].
The resulting dispersion [4] was placed in a 500 ml tall beaker, which was immersed in ice water, and dispersed for 30 minutes with an ultrasonic homogenizer (NISSEI Corporation; US-600T; chips used: 36 mm in diameter). After the dispersion temperature was lowered to 25°C, dispersion was repeated for 30 minutes, and performed until the total dispersion time reached 2 hours, thereby obtaining pigment dispersion [5].
Distilled water was added to the resulting dispersion [5] to dilute it twice, and then, a free polymer was removed by ultrafiltration to obtain dispersion [6].
To 90 g of this dispersion [6] (pigment concentration: 10%), 602.5 g of distilled water was added to dilute it, and then, 193.7 g of a reactive surfactant, Antox MS-60 (Nippon Nyukazai Co., Ltd.; a 20% aqueous solution), was added, followed by ultrasonic irradiation with an ultrasonic cleaner for 30 minutes. Further, 13.8 g of a styrene monomer was added, and 1.52 g of potassium persulfate was added as a polymerization initiator. Then, ultrasonic irradiation was performed with the ultrasonic cleaner for 10 minutes.
Subsequently, a 2 L separable flask was charged with the resulting dispersion, and nitrogen substitution was performed. Thereafter, polymerization was conducted under a nitrogen atmosphere at 70°C for 6 hours with stirring at 200 rpm. After the termination of the polymerization, the pH was adjusted to 8 with an aqueous solution of NaOH. Then, fine polymer particles were removed by ultrafiltration, and concentration was conducted, thereby obtaining dispersion E having a pigment concentration of 8%.

### [Production Example 6]: [Preparation of Microencapsulated Magenta Pigment Dispersion (Dispersion F)]

Dispersion F was obtained in the same manner as in Production Example 5 with the exception that there were used 20.7 g of benzyl methacrylate, 20.7 g of lauryl methacrylate and 27.6 g of trimethylolpropane trimethacrylate as monomers in place of the styrene monomer, and 180.1 g of Aqualon HS-10 manufactured by Daiichi Kogyo Seiyaku Co., Ltd. as a surfactant in place of Antox, to dispersion [6] obtained in Production Example 5, and that the amount of distilled water added was changed to 560.9 g.

### [Example 1]

### (Preparation of Ink Composition)

An ink composition was prepared according to the following formulation:

| | |
|---|---|
| Dispersion A | 5.0 g |
| Deionized water | 3.4 g |
| Glycerol | 1.0 g |
| Triethylene glycol monobutyl ether | 0.5 g |
| Olfine E1010 (a surfactant manufactured by Air Products and Chemicals, Inc. | 0.1 g |

The above-mentioned components were mixed and stirred for 15 minutes. After the pH was adjusted to 8 with an aqueous solution of NaOH, ultrasonic dispersion treatment was conducted for 30 minutes to obtain an ink composition of Example 1.
For the resulting ink composition of Example 1, the following characteristics (a) to (c) were evaluated by the following test methods.
An ink jet printing system printer (EM-930C manufactured by Seiko Epson Corporation) was used as a printer, and commercially available glossy paper (KA420PSK manufactured by Seiko Epson Corporation) was used as printing paper.

(a) Stability of Recording Solution
   The ink composition of Example 1 was maintained at 70°C for 15 hours, and then, the particle size was measured. The smaller an increase in particle size, the more stable it is. For the measurement of the average particle size, an ink jet recording solution was diluted 10,000 times with water, the measurement was made with DLS7000, Otsuka Electronics Co., Ltd., using a He-Ne laser, and the value of the average particle size was calculated by the Cumulant method. The results thereof are shown in Table 1.
(b) Rubbing Resistance of Recorded Image
   In an EM-930C printer, Seiko Epson Corporation, a cartridge was filled with the ink composition of Example 1, and then, printing was made on glossy paper (KA420PSK, Seiko Epson Corporation). Rubbing resistance tests just after printing and after 1 hour were performed according to the following criteria. The results thereof are shown in Table 1.
   A: No color is peeled off even when rubbed with a finger.
   B: Color is slightly peeled off when rubbed with a finger.
   C: Peeling off occurs when rubbed with a finger.
(c) Ejection Stability
   In an EM-930C printer, Seiko Epson Corporation, a cartridge was filled with the ink composition of Example 1, and then, 50 prints were carried out at a plain paper mode. It was visually evaluated according to the following criteria whether a thin spot and the like occur or not.
   A: No thin spot occurs.
   B: A thin spot occurs in the course of printing.
   C: An image cannot be clearly printed.

### [Examples 2 to 6]

Ink compositions of Examples 2 to 6 were obtained in the same manner as in Example 1 with the exception that dispersion A of Example 1 was changed to dispersions B to F. For the resulting ink compositions of Examples 2 to 6, the above-mentioned characteristics of (a) to (c) were evaluated in the same manners as in Example 1. The results thereof are shown in Table 1.

### [Production Example 7]: [Preparation of Microencapsulated Cyan Pigment Dispersion (Dispersion G)]

Pigment Blue 15:3 (solid content: 30.3%) (92.4 g), 140 g of a surfactant, Neogen S-20 (Daiichi Kogyo Seiyaku Co., Ltd.; active ingredient: 20%) and 47.6 g of distilled water were mixed, and dispersed at 25°C for 2 hours using a bead mill self-produced by 0.5 mm-diameter zirconia beads as a medium. After the beads were removed, the pigment concentration was adjusted to 8% to obtain dispersion [7].
Dispersion [7] was placed in a 500 ml tall beaker, which was immersed in ice water, and dispersed for 5 minutes with an ultrasonic homogenizer (NISSEI Corporation; US-600T; chips used: 36 mm in diameter). After the dispersion temperature was lowered to 20°C, dispersion was repeated for 5 minutes, and performed until the total dispersion time reached 60 minutes, thereby obtaining pigment dispersion [8].
Distilled water was added to the resulting dispersion [8] to dilute it twice, and then, a free surfactant was removed by ultrafiltration to obtain dispersion [9].
Then, 225 g of distilled water was added to 30 g of dispersion [9] (pigment concentration: 10%) to dilute it, and then, 15 g of a styrene monomer was added. A 1 L separable flask was charged with the resulting dispersion. After nitrogen substitution, stirring was conducted at 200 rpm for 1 hour, and then, the internal temperature was slowly elevated to 70°C. Potassium persulfate was stirred at 200 rpm at room temperature for 1 hour while keeping the internal temperature at 70°C, and then, 10 g of an aqueous solution in which 0.3 g of KPS was dissolved as a polymerization initiator was added. Subsequently, 30 g of a styrene monomer was slowly added dropwise taking 6 hours, and stirring was further continued for 2 hours to conduct polymerization. After the termination of the polymerization, the pH was adjusted to 8 with an aqueous solution of NaOH. Then, fine polymer particles were removed by ultrafiltration, and concentration was conducted, thereby obtaining dispersion G having a pigment concentration of 8%.

### [Comparative Example 1]

An ink composition of Comparative Example 1 was obtained in the same manner as in Example 1 with the exception that dispersion A of Example 1 was changed to the above-mentioned dispersion G. For this ink composition, the above-mentioned characteristics of (a) to (c) were evaluated in the same manners as in Example 1.
The results thereof are shown in Table 1.

### [Production Example 8]: [Preparation of Microencapsulated Cyan Pigment Dispersion (Dispersion H)]

Pigment Blue 15:3 (solid content: 30.3%) (92.4 g), 140 g of a reactive surfactant, Antox MS-60 (Nippon Nyukazai Co., Ltd.); a 20% aqueous solution) and 47.6 g of distilled water were mixed, and dispersed at 25°C for 2 hours using a bead mill self-produced by 0.5 mm-diameter zirconia beads as a medium. After the beads were removed, the pigment concentration was adjusted to 8% to obtain dispersion [10].
This dispersion [10] was placed in a 500 ml tall beaker, which was immersed in ice water, and dispersed for 5 minutes with an ultrasonic homogenizer (NISSEI Corporation; US-600T; chips used: 36 mm in diameter). After the dispersion temperature was lowered to 20°C, dispersion was repeated for 5 minutes, and performed until the total dispersion time reached 60 minutes, thereby obtaining pigment dispersion [11].
Distilled water was added to the resulting dispersion [11] to dilute it twice, and then, a free surfactant was removed by ultrafiltration to obtain dispersion [12].
Then, 225 g of distilled water was added to 30 g of dispersion [12] (pigment concentration: 10%) to dilute it, and then, 15 g of a styrene monomer was added. A 1 L separable flask was charged with the resulting dispersion. After nitrogen substitution, stirring was conducted at 200 rpm for 1 hour, and then, the internal temperature was slowly elevated to 70°C. Potassium persulfate was stirred at 200 rpm at room temperature for 1 hour while keeping the internal temperature at 70°C, and then, 10 g of an aqueous solution in which 0.3 g of KPS was dissolved as a polymerization initiator was added. Subsequently, 30 g of a styrene monomer was slowly added dropwise taking 6 hours, and stirring was further continued for 2 hours to conduct polymerization. After the termination of the polymerization, the pH was adjusted to 8 with an aqueous solution of NaOH. Then, fine polymer particles were removed by ultrafiltration, and concentration was conducted, thereby obtaining dispersion H having a pigment concentration of 8%.

### [Comparative Example 2]

An ink composition of Comparative Example 2 was obtained in the same manner as in Example 1 with the exception that dispersion A of Example 1 was changed to the above-mentioned dispersion H. For this ink composition, the above-mentioned characteristics of (a) to (c) were evaluated in the same manners as in Example 1.
The results thereof are shown in Table 1.

### [Production Example 9]: [Preparation of Microencapsulated Cyan Pigment Dispersion (Dispersion I)]

Pigment Blue 15:3 (solid content: 30.3%) (92.4 g), 140 g of a polymer dispersant, Johncryl 678 (Johnson Polymer Co., Ltd.); a 20% aqueous solution) and 47.6 g of distilled water were mixed, and dispersed at 25°C for 2 hours using a bead mill self-produced by 0.5 mm-diameter zirconia beads as a medium. After the beads were removed, the pigment concentration was adjusted to 8% to obtain dispersion [13].
This dispersion [13] was placed in a 500 ml tall beaker, which was immersed in ice water, and dispersed for 5 minutes with an ultrasonic homogenizer (NISSEI Corporation; US-600T; chips used: 36 mm in diameter). After the dispersion temperature was lowered to 20°C, dispersion was repeated for 5 minutes, and performed until the total dispersion time reached 60 minutes, thereby obtaining pigment dispersion [14].
Distilled water was added to the resulting dispersion [14] to dilute it twice. Then, a free polymer was removed by ultrafiltration, and concentration was conducted to obtain dispersion I having a pigment concentration of 8%.

### [Comparative Example 3]

An ink composition of Comparative Example 2 was obtained in the same manner as in Example 1 with the exception that dispersion A of Example 1 was changed to the above-mentioned dispersion I. For this ink composition, the above-mentioned characteristics of (a) to (c) were evaluated in the same manners as in Example 1.
The results thereof are shown in Table 1.

### [Production Example 10]: [Preparation of Cyan Pigment Dispersion (Pigment Dispersion J)]

A pigment Blue 15:3 powder (28.0 g), 16.8 g of an unneutralized styrene-acrylic acid resin (styrene/n-butyl acrylate/acrylic acid = 33/22/45; molecular weight: 20,000) and 235.2 g of methyl ethyl ketone were mixed, and dispersed at 25°C for 2 hours using a bead mill self-produced by 0.5 mm-diameter zirconia beads as a medium. After the beads were removed, the pigment concentration was adjusted to 8% to obtain dispersion [15].
This dispersion [15] was placed in a 500 ml tall beaker, which was immersed in ice water, and dispersed for 5 minutes with an ultrasonic homogenizer (NISSEI Corporation; US-60OT; chips used: 36 mm in diameter).
After the dispersion temperature was lowered to 20°C, dispersion was repeated for 5 minutes, and performed until the total dispersion time reached 60 minutes, thereby obtaining pigment dispersion [16].
Then, 20 g of a 1 N sodium hydroxide aqueous solution was added to 200 g of dispersion [16], and 250 g of distilled water was slowly added dropwise with stirring. Thereafter, methyl ethyl ketone was removed by distillation using a rotary evaporator to obtain dispersion [17].
Distilled water was added to the resulting dispersion [17] to dilute it twice. Then, a free polymer was removed by ultrafiltration, and concentration was conducted to obtain dispersion J having a pigment concentration of 8%.

### [Comparative Example 4]

An ink composition of Comparative Example 4 was obtained in the same manner as in Example 1 with the exception that dispersion A of Example 1 was changed to the above-mentioned dispersion J. For this ink composition, the above-mentioned characteristics of (a) to (c) were evaluated in the same manners as in Example 1. The results thereof are shown in Table 1.

**[Table 1]**

| Example (Comparative Example) | Stability of Ink | | | Rubbing Resistance | | Ejection Stability |
|---|---|---|---|---|---|---|
| | Particle Size (before Test) [nm] | Particle Size (after Test) [nm] | Stability | Just after Printing | 1 Hour after Printing | |
| Example 1 | 105 | 106 | A | A | A | A |
| Example 2 | 123 | 126 | A | A | A | A |
| Example 3 | 110 | 123 | A | A | A | A |
| Example 4 | 97 | 104 | A | A | A | A |
| Example 5 | 136 | 140 | A | A | A | A |
| Example 6 | 141 | 151 | A | A | A | A |
| Com. Ex.1 | 105 | Unmeasurable | C | C | C | C |
| Com. Ex. 2 | 220 | 548 | C | C | B | C |
| Com. Ex. 3 | 128 | 168 | B | C | B | C |
| Com. Ex. 4 | 108 | 120 | A | B | B | B |

## Claims

1. A microencapsulated color material in which surfaces of color material particles are covered with a wall material mainly comprising a polymer, wherein the polymer comprises:
1) a polymer (A) having an ionic group and a hydrophobic group; and
2) a polymer (B) having at least: repeating structural units derived from a first polymerizable surfactant having an ionic group with a charge opposite to the charge of the ionic group of the polymer, a hydrophobic group and a polymerizable group; and repeating structural units derived from a second polymerizable surfactant having a charge of the same kind as or opposite to the charge of the first polymerizable surfactant, and/or a hydrophilic monomer having a charge of the same kind as or opposite to the charge of the ionic group of the polymer and/or a hydrophobic monomer.

2. The microencapsulated color material according to claim 1, wherein the color material particles are non-dispersible in water or insoluble in water.

3. The microencapsulated color material according to claim 1 or 2, wherein the color material particles are a pigment.

4. The microencapsulated color material according to any one of claims 1 to 3, wherein the polymer (A) having an ionic group and a hydrophobic group is a copolymer.

5. The microencapsulated color material according to any one of claims (1) to (4), wherein the ionic group of the polymer (A) is a cationic group.

6. A production process of the microencapsulated color material according to any one of claims (1) to (5), wherein the process comprises at least the steps of:
(1) allowing the polymer (A) having an ionic group and a hydrophobic group to be adsorbed on the surfaces of the color material particles in an aqueous solvent;
(2) adding the first polymerizable surfactant having an ionic group with a charge opposite to the charge of the ionic group of the polymer (A), a hydrophobic group and a polymerizable group, to an aqueous dispersion of the color material particles to which the polymer (A) have been adsorbed, followed by mixing;
(3) after the step (2), adding the second polymerizable surfactant having a charge of the same kind as or opposite to the charge of the first polymerizable surfactant, and/or the hydrophilic monomer having a charge of the same kind as or opposite to the charge of the ionic group of the polymer (A) and/or the hydrophobic monomer, followed by emulsification; and
(4) following the step (3), adding a polymerization initiator thereto, and conducting polymerization to obtain the polymer (B).

7. An ink composition comprising the microencapsulated color material according to any one of claims 1 to 5.

8. An ink jet recording process comprising ejecting droplets of the ink composition according to claim 7 from an ink jet head so that the droplets adhere to a recording medium.

9. Recorded matter using the recording process according to claim 8.

10. Microencapsulated matter in which a surface of a core material is covered with a wall material mainly comprising a polymer, wherein the polymer comprises:
1) a polymer (A) having an ionic group and a hydrophobic group;
2) repeating structural units derived from a first polymerizable surfactant having an ionic group with a charge opposite to the charge of the ionic group of the polymer (A), a hydrophobic group and a polymerizable group, and
3) a polymer (B) having at least repeating structural units derived from a second polymerizable surfactant having a charge of the same kind as or opposite to the charge of the first polymerizable surfactant, and/or a hydrophilic monomer having a charge of the same kind as or opposite to the charge of the ionic group of the polymer (A) and/or a hydrophobic monomer.
